(19) Europäisches Patentamt
European Patent Office
Office européen des brevets

(11) EP 3 392 060 B1

(12) # EUROPEAN PATENT SPECIFICATION

(45) Date of publication and mention of the grant of the patent:
**12.02.2020 Bulletin 2020/07**

(21) Application number: **16875455.4**

(22) Date of filing: **05.12.2016**

(51) Int Cl.:
***B60C 5/01*** *(2006.01)* ***B60C 1/00*** *(2006.01)*
***B60C 9/00*** *(2006.01)* ***B60C 9/04*** *(2006.01)*
***B60C 5/00*** *(2006.01)* ***B60C 9/22*** *(2006.01)*

(86) International application number:
**PCT/JP2016/086111**

(87) International publication number:
**WO 2017/104472 (22.06.2017 Gazette 2017/25)**

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2015 JP 2015245512**

(43) Date of publication of application:
**24.10.2018 Bulletin 2018/43**

(73) Proprietor: **Bridgestone Corporation**
**Tokyo 104-8340 (JP)**

(72) Inventors:
- **SUZUKI, Takahiro**
  **Tokyo 104-8340 (JP)**
- **SONE, Naoyuki**
  **Tokyo 104-8340 (JP)**

(74) Representative: **Oxley, Robin John George**
**Marks & Clerk LLP**
**15 Fetter Lane**
**London EC4A 1BW (GB)**

(56) References cited:
**WO-A1-2014/175453 JP-A- 2013 180 619**

EP 3 392 060 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a tire.

### Background Art

In recent years, tires using a resin material as a constituting member have been developed for weight reduction, ease of molding, recyclability, and the like. As an attempt to improve the durability (e.g., stress resistance, internal pressure resistance, and rigidity) of a tire containing a resin material, there has been proposed a method of spirally winding a reinforcing cord on a tire main body (hereinafter, also referred to as "tire frame") made of a resin.

In order to improve the durability of a tire having such a structure, it is important to improve the adhesion durability between the tire frame and the reinforcing cord. Therefore, for example, a method of improving the adhesion durability between a tire frame and a reinforcing cord by coating a metal cord (e.g., a steel cord) with a resin material and thereby reducing the difference in rigidity between the metal cord and the tire frame has been proposed.

As a method of coating a metal cord with a resin material, there has been proposed a method of adhering a metal cord and a resin coating via an adhesive layer containing a hot-melt adhesive (for example, WO 2014/175453).

## SUMMARY OF INVENTION

### Technical Problem

Tire frames containing a resin material can be produced more easily and at a lower cost than conventional rubber-made tire frames; however, they generally have high hardness and readily transmit vibrations. Particularly, a tire in which a resin-coated metal member is wound around an outer circumferential portion of a resin-made tire frame is likely to have high rigidity as a whole; therefore, there is room for further improvement in terms of riding comfort during traveling.

In view of the above-described circumstances, an object of the present disclosure is to provide a tire having excellent riding comfort during traveling.

### Solution to Problem

The present invention provides a tire comprising: a circular tire frame containing a resin material; and a metal-resin complex, wound around an outer circumferential portion of the tire frame, which includes a metal member, an adhesive layer and a resin layer in this order, wherein resin encompasses thermoplastic resins, thermoplastic elastomers and thermosetting resins, but not vulcanized rubbers, and characterised in that a tensile elastic modulus of the adhesive layer is less than a tensile elastic modulus of the resin layer.

### Effects of Invention

According to an embodiment of the invention, a tire having excellent riding comfort during traveling may be provided.

## BRIEF DESCRIPTION OF DRAWINGS

FIG. 1A is a perspective view illustrating a cross-section of a part of a tire according to one embodiment of the invention;

FIG. 1B is a cross-sectional view of a bead portion fitted to a rim;

FIG. 2 is a cross-sectional view taken along the tire rotation axis, which illustrates a state in which a metal-resin complex is embedded in a crown portion of a tire frame of a tire according to a first embodiment; and

FIG. 3 is a drawing for explaining operations of arranging the metal-resin complex on the crown portion of the tire frame using a metal-resin complex heating device and rollers.

DESCRIPTION OF EMBODIMENTS

Specific embodiments of the invention will be described in detail hereinafter. However, it should be noted that the invention is not restricted to the embodiments below but can be carried out with appropriate modification within the scope of the claims of the invention.

The term "resin" used herein is a concept that encompasses thermoplastic resins, thermoplastic elastomers and thermosetting resins, but not vulcanized rubbers. Further, in the descriptions of resins below, the term "same kind" means that the resins of interest have a common skeleton as the skeleton constituting the main chain of each resin as in, for example, ester-based resins or styrene-based resins.

In the present specification, those numerical ranges that are stated with "to" each denote a range that includes the numerical values stated before and after "to" as the lower and upper limit values, respectively.

The term "step" used herein encompasses not only discrete steps but also those steps which cannot be clearly distinguished from other steps, as long as the intended purpose of the step is achieved.

In the present specification, when reference is made to the amount of a component contained in a composition and there are plural substances corresponding to the component in the composition, the indicated amount of the component means the total amount of the plural substances existing in the composition unless otherwise specified.

The tire according to one embodiment of the invention includes: a circular tire frame containing a resin material; and a metal-resin complex which is wound around an outer circumferential portion of the tire frame, which includes a metal member, an adhesive layer and a resin layer in this order, wherein resin encompasses thermoplastic resins, thermoplastic elastomers and thermosetting resins, but not vulcanized rubbers, and characterised in that the tensile elastic modulus of the adhesive layer is less than the tensile elastic modulus of the resin layer.

As described above, resins have higher hardness than rubbers. Therefore, for example, a tire in which a metal-resin complex that has a metal member, an adhesive layer and a resin layer is wound around an outer circumferential portion of a tire frame formed from a resin-containing resin material is likely to have higher rigidity as a whole than conventional rubber-made tires. In a case in which the tire as a whole has high rigidity, vibrations during traveling are easily transmitted, and the riding comfort may thereby be deteriorated. Meanwhile, in order to make the vibrations during traveling less likely to be transmitted, a method of reducing the rigidity of the resin material itself used for the formation of the tire frame is considered. However, taking into considering the balance between the likeliness of the vibrations to be transmitted and other tire performances (e.g., durability and running performance), there seems to be a limitation on the method of reducing the rigidity of the resin material itself.

Therefore, as a result of studies, the present inventors brought their focus, not on the tire frame, but on the adhesive layer of the metal-resin complex wound around the outer circumferential portion of the tire frame. Specifically, the present inventors discovered that the riding comfort during traveling is improved by applying, as the metal-resin complex, one in which a metal member and a resin layer are adhered via an adhesive layer having a smaller tensile elastic modulus than the resin layer.

The reason why a tire having such the configuration has excellent riding comfort during traveling is not clear; however, it is presumed to be because the adhesive layer having a smaller tensile elastic modulus than the resin layer not only plays a role in adhering the metal member and the resin layer, but also functions as a cushion that absorbs vibrations during traveling.

The metal member, the resin layer, and the adhesive layer for forming the metal-resin complex included in the tire are each described below. In addition, the tire frame used in one embodiment of the tire in the invention, as well as embodiments of the tire, are described below.

<Metal-Resin Complex>

The metal-resin complex has a structure in which a metal member, an adhesive layer having a smaller tensile elastic modulus than a resin layer, and the resin layer are arranged in this order, and the shape of the metal-resin complex is not particularly restricted. The metal-resin complex may have, for example, a cord shape or a sheet shape. The metal-resin complex is arranged on the crown portion (i.e., outer circumferential portion) of a tire frame included in a tire.

The metal-resin complex can be used as, for example, a belt layer formed by arranging a single or plural cord-form metal-resin complexes on the outer circumferential portion of the tire frame along the tire circumferential direction, or an intersecting belt layer in which plural cord-form metal-resin complexes are arranged at an angle with respect to the tire circumferential direction to intersect with each other.

It is preferable that the metal-resin complex(es) is/are arranged such that the average distance between adjacent metal members is from 400 $\mu$m to 3,200 $\mu$m. The average distance between adjacent metal members is more preferably from 600 $\mu$m to 2,200 $\mu$m, still more preferably from 800 $\mu$m to 1,500 $\mu$m. In a case in which the average distance between the metal members of adjacent metal-resin complexes is 400 $\mu$m or greater, an increase in tire weight is suppressed, so that excellent fuel efficiency in traveling tends to be attained. Meanwhile, in a case in which the average

distance between the metal members of adjacent metal-resin complexes is 3,200 μm or less, a sufficient tire-reinforcing effect tends to be obtained.

The term "adjacent metal-resin complexes" used herein refers to a combination of one metal-resin complex and other metal-resin complex positioned closest thereto, and the term encompasses both a case in which different metal-resin complexes are adjacent to each other and a case in which different parts of the same metal-resin complex are adjacent to each other (e.g., a case in which a single metal complex is wound plural times around the outer circumference of a tire frame).

The term "average distance between metal members" used herein refers to a value determined by the following Formula:

$$\text{Average distance between metal members} = \{\text{Width of belt portion} - (\text{Thickness of metal member} \times n)\}/(n - 1)$$

The term "belt portion" means a part where the metal-resin complex(es) is/are arranged on the outer circumferential portion of a tire frame.

In the above Formula, "n" is the number of metal-resin complexes that are observed at a cross-section obtained by cutting the tire frame, on which the metal resin complex(es) is/are arranged, in the direction perpendicular to the tire radial direction.

In the above Formula, the "width of belt portion" means the length along the outer circumferential surface of the tire frame between, among metal-resin complexes observed at the above-described cross-section, those metal-resin complexes that are positioned at the respective ends of the belt portion (i.e., at positions that are each the farthest from the centerline of the tire frame in the lateral direction).

In the above Formula, the "thickness of metal member" is a number-average value of the thickness measured at five spots that are arbitrarily selected. In a case in which the metal member consists of a single metal cord, the measured value of the thickness is the maximum diameter at a cross-section of the metal member (i.e., the distance between two points that are arbitrarily selected on the outline of the metal member at a cross-section and have the maximum distance therebetween). Meanwhile, in a case in which the metal member consists of plural metal cords, the measured value of the thickness is the diameter of a circle that is the smallest among those circles that include all of the cross-sections of the plural metal cords observed at a cross-section of the metal member.

It is noted here that, in a case in which metal members having different thicknesses are contained in the belt portion, the thickness of the thickest metal member is defined as the "thickness of metal member".

In the metal-resin complex, the "structure in which a metal member, an adhesive layer having a smaller tensile elastic modulus than a resin layer, and the resin layer are arranged in this order " encompasses, for example, a state in which the surface of the metal member is entirely covered with the resin layer via the adhesive layer, and a state in which the surface of the metal member is partially covered with the resin layer via the adhesive layer. It is preferable that at least a region where the metal-resin complex and the tire frame are in contact with each other has the structure in which a metal member, an adhesive layer having a smaller tensile elastic modulus than a resin layer, and the resin layer are arranged in this order. The metal-resin complex may also have other layer in addition to the metal member, the adhesive layer and the resin layer; however, from the standpoint of adhesion between the metal member and the resin layer, it is desired that the metal member and the adhesive layer are in direct contact, and that the adhesive layer and the resin layer are in direct contact.

*Metal Member*

The metal member is not particularly restricted and, for example, a metal cord or the like that is used in a conventional rubber-made tire can be used as appropriate. Examples of the metal cord include monofilaments (i.e., single strands) each composed of a single metal cord, and multifilaments (i.e., twisted strands) each obtained by twisting plural metal cords. From the standpoint of further improving the tire durability, the metal member is preferably a multifilament. The cross-sectional shape, size (e.g., diameter) and the like of the metal member are not particularly limited, and any metal member that is suitable for the desired tire may be selected and used as appropriate.

In a case in which the metal member is a twisted strand of plural cords, the number of the plural cords is, for example, from 2 to 10, preferably from 5 to 9.

From the standpoint of satisfying both internal pressure resistance and weight reduction of the tire, the thickness of the metal member is preferably from 0.2 mm to 2 mm, more preferably from 0.8 mm to 1.6 mm. The thickness of the metal member is defined as the number-average value of the thickness measured at five spots that are arbitrarily selected. The thickness of the metal member is determined by the above-described method.

The tensile elastic modulus (hereinafter, unless otherwise specified, the term "elastic modulus" used herein means tensile elastic modulus) of the metal member itself is usually from about 100,000 MPa to about 300,000 MPa, preferably from 120,000 MPa to 270,000 MPa, more preferably from 150,000 MPa to 250,000 MPa. The tensile elastic modulus of the metal member is determined from the slope of a stress-strain curve plotted using a ZWICK-type chuck in a tensile tester.

The elongation at break (i.e., tensile elongation at break) of the metal member itself is usually from about 0.1% to about 15%, preferably from 1% to 15%, more preferably from 1% to 10%. The tensile elongation at break of the metal member can be determined from the strain based on a stress-strain curve plotted using a ZWICK-type chuck in a tensile tester.

*Resin Layer*

The material of the resin layer is not particularly restricted and, for example, at least one thermoplastic material selected from the group consisting of thermoplastic resins and thermoplastic elastomers can be used.

From the standpoints of the ease of molding and the adhesion with the adhesive layer, it is desired that the resin layer contains a thermoplastic elastomer.

The term "thermoplastic resin" used herein refers to a polymer compound that is softened and fluidized as the temperature increases and thereby assumes a relatively hard and strong state by cooling, but does not have rubber-like elasticity.

The term "thermoplastic elastomer" used herein refers to a copolymer that has a hard segment and a soft segment. Specific examples of a thermoplastic elastomer include copolymers that include a polymer constituting a crystalline high-melting-point hard segment or a high-cohesive-strength hard segment, and a polymer constituting an amorphous low-glass-transition-temperature soft segment. Examples of a thermoplastic elastomer also include those which not only are softened and fluidized as the temperature increases and become relatively hard and strong when cooled, but also exhibit rubber-like elasticity.

Examples of the hard segment include segments having a structure that contains a rigid group (e.g., an aromatic group or an alicyclic group) in the main skeleton, or a structure that allows intermolecular packing by an intermolecular hydrogen bond or $\pi$-$\pi$ interaction. Examples of the soft segment include segments having a structure that contains a long-chain group (e.g., a long-chain alkylene group) in the main chain and a high degree of freedom in molecular rotation and exhibits elasticity.

Thermoplastic Resin

Examples of a thermoplastic resin include those of the same kind as the thermoplastic resin used in the below-described tire frame. Specific examples of the thermoplastic rasin include polyamide-based thermoplastic resins, polyester-based thermoplastic resins, olefin-based thermoplastic resins, polyurethane-based thermoplastic resins, vinyl chloride-based thermoplastic resins, and polystyrene-based thermoplastic resins. These thermoplastic resins may be used singly, or two or more kinds thereof may be used in combination. Thereamong, as a thermoplastic resin, at least one selected from the group consisting of polyamide-based thermoplastic resins, polyester-based thermoplastic resins, and olefin-based thermoplastic resins is preferable. As the thermoplastic resin, from the standpoints of the heat resistance and the like of the tire, at least one selected from the group consisting of polyamide-based thermoplastic resins and polyester-based thermoplastic resins is more preferable. Further, in a case in which the resin layer contains a polyamide-based thermoplastic resin, adhesion between the adhesive layer and the resin layer can be improved, for example, when an adhesive layer containing the below-described hot-melt adhesive is applied as the adhesive layer.

In a case in which the resin layer contains a thermoplastic resin, from the standpoint of adhesion between the resin layer and the tire frame, it is desired that the resin contained in the tire frame and the thermoplastic resin contained in the resin layer are materials of the same kind. For example, in a case in which a polyamide-based thermoplastic resin is used as the thermoplastic resin contained in the resin layer, it is preferable to use at least one of a polyamide-based thermoplastic resin or a polyamide-based thermoplastic elastomers as the resin contained in the tire frame.

-Polyamide-based Thermoplastic Resin-

Examples of a polyamide-based thermoplastic resin include a polyamide constituting a hard segment of a polyamide-based thermoplastic elastomer used in the below-described tire frame. Specific examples of the polyamide-based thermoplastic resin include a polyamide (Polyamide 6) obtained by ring-opening polycondensation of $\varepsilon$-caprolactam, a polyamide (Polyamide 11) obtained by ring-opening polycondensation of undecanelactam, a polyamide (Polyamide 12) obtained by ring-opening polycondensation of lauryl lactam, a polyamide (Polyamide 66) obtained by polycondensation of a diamine and a dibasic acid, and a polyamide (Amide MX) containing *meta*-xylene diamine as a

structural unit.

Amide 6 can be represented by, for example, $\{CO-(CH_2)_5-NH\}_n$; Amide 11 can be represented by, for example, $\{CO-(CH_2)_{10}-NH\}_n$; Amide 12 can be represented by, for example, $\{CO-(CH_2)_{11}-NH\}_n$; Amide 66 can be represented by, for example, $\{CO(CH_2)_4CONH(CH_2)_6NH\}_n$; and Amide MX can be represented by, for example, the below-described Formula (A-1), wherein n represents the number of recurring units.

As a commercially available product of Amide 6, for example, "UBE NYLON" Series (e.g., 1022B and 1011FB) manufactured by Ube Industries, Ltd. can be used. As a commercially available product of Amide 11, for example, "RILSAN B" Series manufactured by Arkema K.K. can be used. As a commercially available product of Amide 12, for example, "UBE NYLON" Series (e.g., 3024U, 3020U, and 3014U) manufactured by Ube Industries, Ltd. can be used. As a commercially available product of Amide 66, for example, "UBE NYLON" Series (e.g., 2020B and 2015B) manufactured by Ube Industries, Ltd. can be used. As a commercially available product of Amide MX, for example, "MX NYLON" Series (e.g., S6001, S6021, and S6011) manufactured by Mitsubishi Gas Chemical Co., Inc. can be used.

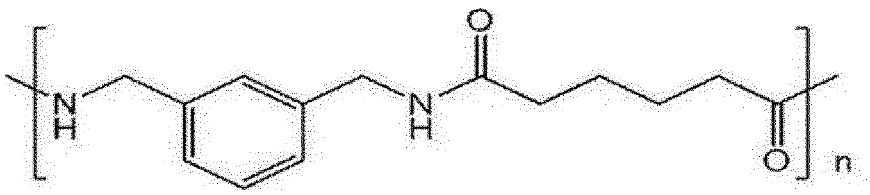

(A-1)

The polyamide-based thermoplastic resin may be a homopolymer consisting of only the above-described structural unit, or a copolymer of the above-described structural unit and other monomer. In the case of a copolymer, the content of the structural unit in each polyamide-based thermoplastic resin is preferably 40% by mass or higher.

-Polyester-based Thermoplastic Resin-

Examples of a polyester-based thermoplastic resin include a polyester constituting a hard segment of a polyester-based thermoplastic elastomer used in the below-described tire frame.

Specific examples of the polyester-based thermoplastic resin include aliphatic polyesters such as polylactic acid, polyhydroxy-3-butyl butyrate, polyhydroxy-3-hexyl butyrate, poly($\varepsilon$-caprolactone), polyenantholactone, polycaprylolactone, polybutylene adipate, and polyethylene adipate; and aromatic polyesters such as polyethylene terephthalate, polybutylene terephthalate, polyethylene naphthalate, and polybutylene naphthalate. Thereamong, from the standpoints of heat resistance and processability, polybutylene terephthalate is preferable as the polyester-based thermoplastic resin.

As a commercially available product of the polyester-based thermoplastic resin, for example, "DURANEX" Series (e.g., 2000 and 2002) manufactured by Polyplastics Co., Ltd., "NOVADURAN" Series (e.g., 5010R5 and 5010R3-2) manufactured by Mitsubishi Engineering-Plastics Corporation, and "TORAYCON" Series (e.g., 1401X06 and 1401X31) manufactured by Toray Industries, Inc., can be used.

-Olefin-based Thermoplastic Resin-

Examples of an olefin-based thermoplastic resin include a polyolefin constituting a hard segment of an olefin-based thermoplastic elastomer used in the below-described tire frame.

Specific examples of the olefin-based thermoplastic resin include polyethylene-based thermoplastic resins, polypropylene-based thermoplastic resins, and polybutadiene-based thermoplastic resins. Thereamong, from the standpoints of heat resistance and processability, a polypropylene-based thermoplastic resin is preferable as the olefin-based thermoplastic resin.

Specific examples of the polypropylene-based thermoplastic resin include propylene homopolymers, propylene-$\alpha$-olefin random copolymers, propylene-$\alpha$-olefin block copolymers. Examples of the $\alpha$-olefin include $\alpha$-olefins having from about 3 to about 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

Thermoplastic Elastomer

Examples of a thermoplastic elastomer include those of the same kind as the thermoplastic elastomer used in the below-described tire frame.

Specific examples thereof include polyamide-based thermoplastic elastomers, polyester-based thermoplastic

elastomers, olefin-based thermoplastic elastomers, and polyurethane-based thermoplastic elastomers. These thermoplastic elastomers may be used singly, or two or more kinds thereof may be used in combination. Thereamong, as the thermoplastic elastomer, at least one selected from the group consisting of polyamide-based thermoplastic elastomers, polyester-based thermoplastic elastomers, and olefin-based thermoplastic elastomers is preferable. As the thermoplastic elastomer, from the standpoints of the heat resistance and the like of the tire, at least one selected from the group consisting of polyamide-based thermoplastic elastomers and polyester-based thermoplastic elastomers is more preferable. Further, in a case in which a polyamide-based thermoplastic elastomer is used as the thermoplastic material contained in the resin layer, adhesion between the adhesive layer and the resin layer can be improved, for example, when an adhesive layer containing the below-described hot-melt adhesive is applied as the adhesive layer.

In cases in which the resin layer contains a thermoplastic elastomer, from the standpoint of adhesion between the resin layer and the tire frame, it is desired that the resin contained in the tire frame and the thermoplastic elastomer contained in the resin layer are materials of the same kind. For example, in a case in which a polyamide-based thermoplastic elastomer is used as the thermoplastic elastomer contained in the resin layer, it is preferable to use at least one of a polyamide-based thermoplastic resin or a polyamide-based thermoplastic elastomer as the resin contained in the tire frame.

-Polyamide-based Thermoplastic Elastomer-

Examples of the polyamide-based thermoplastic elastomer are the same as those of the polyamide-based thermoplastic elastomer that may be used in the below-described tire frame, and preferable exampless thereof are also the same. Therefore, detailed descriptions thereof are omitted here.

-Polyester-based Thermoplastic Elastomer-

Examples of the polyester-based thermoplastic elastomer are the same as those of the polyester-based thermoplastic elastomer that may be used in the below-described tire frame, and preferable examples thereof are also the same. Therefore, detailed descriptions thereof are omitted here.

-Olefin-based Thermoplastic Elastomer-

Examples of the olefin-based thermoplastic elastomer are the same as those of the olefin-based thermoplastic elastomer that may be used in the below-described tire frame, and preferable examples thereof are also the same. Therefore, detailed descriptions thereof are omitted here.

The resin layer may take a aspect of containing both a thermoplastic resin and a thermoplastic elastomer and having a sea phase, which is a matrix phase containing the thermoplastic resin, and an island phase, which is a dispersed phase containing the thermoplastic elastomer. In a case in which the resin layer has such a sea-island structure in which a thermoplastic elastomer is dispersed in a matrix composed of a thermoplastic resin, the resin layer is made softer and superior riding comfort during traveling can be achieved as compared to a case in which a thermoplastic resin is used alone.

In a case in which the resin layer has a sea-island structure, from the standpoint of easily forming the sea-island structure formed by a thermoplastic resin-containing sea phase and a thermoplastic elastomer-containing island phase, a mass ratio (p/e) of the thermoplastic resin (p) and the thermoplastic elastomer (e) in the resin layer is preferably from 95/5 to 55/45, more preferably from 90/10 to 60/40, still more preferably from 85/15 to 70/30.

Whether or not a thermoplastic elastomer-containing island phase is dispersed in a thermoplastic resin-containing sea phase in the resin layer can be confirmed by observing a photograph thereof taken under an SEM (scanning electron microscope).

The size of the thermoplastic elastomer-containing island phase (i.e., the major axis of the island phase) is preferably from 0.4 μm to about 10.0 μm, more preferably from 0.5 μm to about 7 μm, particularly preferably from 0.5 μm to about 5 μm. The size of each phase can be measured by observing a photograph thereof taken under an SEM (scanning electron microscope).

Others

The average thickness of the resin layer is not particularly restricted. From the standpoint of attaining excellent durability and weldability, the average thickness of the resin layer is preferably from 10 μm to 1,000 μm, more preferably from 50 μm to 700 μm, still more preferably from 290 μm to 310 μm, particularly preferably from 295 μm to 305 μm.

The average thickness of the resin layer is defined as the number-average value of the thickness of the resin layer that is determined by taking SEM images at five arbitrary spots of a cross-section obtained by cutting the metal-resin complex along the layering direction of the metal member, the adhesive layer and the resin layer, and subsequently measuring the thickness of the resin layer on the thus obtained SEM images. The thickness of the resin layer on each SEM image is defined as the value measured at a part having the smallest thickness (i.e., a part where the distance between the adhesive layer-resin layer interface and the outer edge of the metal-resin complex is the smallest).

The tensile elastic modulus of the resin layer is not particularly restricted as long as it is greater than the tensile elastic modulus of the adhesive layer, and it is, for example, from 50 MPa to 1,000 MPa. From the standpoints of riding comfort and running performance, the tensile elastic modulus of the resin layer is preferably from 50 MPa to 800 MPa, more preferably from 50 MPa to 700 MPa, still more preferably from 217 MPa to 335 MPa.

The tensile elastic modulus of the resin layer can be controlled based on, for example, the type of the resin contained in the resin layer.

The tensile elastic modulus is measured in accordance with JIS K7113:1995.

Specifically, the tensile elastic modulus is measured using, for example, SHIMADZU AUTOGRAPH AGS-J (5 kN) manufactured by Shimadzu Corporation at a tensile rate of 200 mm/min. For the measurement of the tensile elastic modulus of the resin layer contained in the metal-resin complex, for example, a measurement sample made of the same material as the resin layer may be separately prepared to measure the elastic modulus, or the elastic modulus may be directly measured at a cross-section of the metal-resin complex under an atomic force microscope (AFM) or the like.

The resin layer may also contain a component other than a resin. Examples of such other components include rubbers, elastomers, thermoplastic resins, various fillers (e.g., silica, calcium carbonate, and clay), anti-aging agents, oils, plasticizers, color developers, and weathering agents.

*Adhesive Layer*

The adhesive layer is not particularly restricted as long as it is arranged between the metal member and the resin layer and has a smaller tensile elastic modulus than the resin layer. The tensile elastic modulus of the adhesive layer can be controlled based on, for example, the type of an adhesive used for the formation of the adhesive layer, the conditions for the formation of the adhesive layer, and the thermal history (e.g., heating temperature and heating time).

The adhesive layer is preferably formed using an adhesive.

Examples of the type of the adhesive used for the formation of the adhesive layer include hot-melt adhesives and solvent-based adhesives. As the adhesive used for the formation of the adhesive layer, these adhesives may be used singly, or two or more kinds thereof may be used in combination.

In a case in which the adhesive used for the formation of the adhesive layer is a non-reactive adhesive, the adhesive layer is a layer containing the non-reactive adhesive, while in a case in which the adhesive used for the formation of the adhesive layer is a reactive adhesive, the adhesive layer is a layer containing a reaction product of the reactive adhesive.

Hot-melt Adhesive

The term "hot-melt adhesive" used herein means an adhesive that contains a thermoplastic resin as a main component and has a solid content of 95% by mass or higher, preferably 99% by mass or higher, more preferably 99.5% by mass or higher, still more preferably 100% by mass, which adhesive is either solid or semi-solid at normal temperature (25°C) but is melted by heating.

Since a hot-melt adhesive is adhered to an adherend by, for example, coating the adhesive on the adherend while heat-melting the adhesive, and subsequently cooling and thereby solidifying the thus coated adhesive, the hot-melt adhesive can be tightly adhered to the adherend even if the surface of the adherend has irregularities. Accordingly, it is considered that, since the metal member and the resin layer, which are adherends, can be firmly fixed with each other, the resistance of the metal member against being pulled out from the resin layer can be improved. Further, since the hot-melt adhesive contains no organic solvent, it is not necessary to perform a drying process for solvent removal, which is also excellent from the environmental and production standpoints.

The thermoplastic resin contained in the hot-melt adhesive is not particularly restricted. Since the tire may be subjected to a high temperature during the use, the thermoplastic resin contained as a main component preferably has a softening point of higher than 100°C.

Examples of the hot-melt adhesive include adhesives that contain, as a main component (i.e., principal ingredient), one or more thermoplastic resins, such as a modified olefin-based resin (e.g., a modified polyethylene-based resin or a modified polypropylene-based resin), a polyamide-based resin, a polyurethane-based resin, a polyester-based resin, a modified polyester-based resin, an ethylene-ethyl acrylate copolymer, or an ethylene-vinyl acetate copolymer. Thereamong, from the standpoint of the adhesiveness to the metal member and the resin layer, a hot-melt adhesive containing at least one selected from the group consisting of modified olefin-based resins, polyester-based resins, modified polyester-based resins, ethylene-ethyl acrylate copolymers, and ethylene-vinyl acetate copolymers is preferable; a hot-melt adhesive containing at least one selected from the group consisting of modified olefin-based resins and modified polyester-based resins is more preferable; a hot-melt adhesive containing at least one selected from the group consisting of acid-modified olefin-based resins and modified polyester-based resins is still more preferable; a hot-melt adhesive containing at least one selected from the group consisting of acid-modified olefin-based resins and acid-modified polyester-based resins is particularly preferable; and a hot-melt adhesive containing an acid-modified olefin-based resin is most preferable.

It is noted here that the term "acid-modified olefin-based resin" used herein means an olefin-based resin that is acid-modified with at least one of a unsaturated carboxylic acid or a anhydride thereof, specifically a polyolefin to which an unsaturated carboxylic acid or the like is chemically bound (e.g., through an addition reaction or a graft reaction). Examples of the acid-modified olefin-based resin include modified olefin-based resins obtained by graft-copolymerizing at least one of a unsaturated carboxylic acid or a anhydrides thereof to a polyolefin.

Examples of an unsaturated carboxylic acid modifying an olefin-based resin include acrylic acid, methacrylic acid, maleic acid, fumaric acid, and itaconic acid, among which maleic acid is preferable from the standpoint of the adhesiveness to the metal member and the resin layer.

Examples of the olefin-based resin include polyethylene-based resins, polypropylene-based resins, and polybutadiene-based resins.

As the hot-melt adhesive, one which contains, among acid-modified olefin-based resins, particularly at least one thermoplastic resin selected from the group consisting of maleic acid-modified polyethylene-based resins and maleic acid-modified polypropylene-based resins as a main component (i.e., principal ingredient) can be preferably used, since such a hot-melt adhesive is strong against environmental changes in temperature and humidity and highly adhesive to the metal member and the resin layer and allows the metal member to have excellent resistance against being pulled out from the resin layer.

Similarly, the term "acid-modified polyester-based resin" used herein means a polyester-based resin that is acid-modified with at least one of a unsaturated carboxylic acid or a anhydride thereof, specifically a polyester resin to which an unsaturated carboxylic acid or the like is chemically bound (e.g., through an addition reaction or a graft reaction). Examples of the acid-modified polyester-based resin include modified polyester-based resins obtained by graft-copolymerizing at least one of a unsaturated carboxylic acid or a anhydride thereof to a polyester resin.

Examples of an unsaturated carboxylic acid modifying a polyester-based resin include acrylic acid, methacrylic acid, maleic acid, fumaric acid, and itaconic acid, among which maleic acid is preferable from the standpoint of the adhesiveness to the metal member and the resin layer.

Examples of the polyester-based resin include aliphatic polyester-based resins and aromatic polyester-based resins.

As the hot-melt adhesive, one which contains, among acid-modified polyester-based resins, particularly a maleic acid-modified polyester-based resin as a main component (i.e., principal ingredient) can be preferably used, since such a hot-melt adhesive is strong against environmental changes in temperature and humidity and highly adhesive to the metal member and the resin layer and allows the metal member to have excellent resistance against being pulled out from the resin layer.

In the hot-melt adhesive, in addition to the thermoplastic resin contained as a main component, an additive such as a tackifying resin, a softening agent (e.g., a plasticizer), an antioxidant (e.g., an anti-aging agent) or a heat stabilizer may be incorporated as required.

Solvent-based Adhesive

The term "solvent-based adhesive" used herein means an adhesive in which an organic solvent is used as a solvent and which is cured when the solvent is evaporated, and specific examples thereof include resin solutions which contain an organic solvent as a dissolving liquid, and resin dispersions which contain an organic solvent as a dispersion medium.

A solvent-based adhesive can impart an improved wettability to an adherend and permeate into the irregularities and gaps on the surface of the adherend by, for example utilizing the polarity of an organic solvent used as a solvent; therefore, such the solvent-based adhesive can exhibit favorable adhesiveness to both the metal member and the resin layer, which are made of different substances.

The solvent-based adhesive is not particularly restricted, and examples thereof include adhesives that contain, as a main component (i.e., principal ingredient), one or more of epoxy-based resins, phenolic resins, olefin-based resins, polyurethane-based resins, vinyl-based resins (e.g., vinyl acetate-based resin and polyvinyl alcohol-based resins), synthetic rubbers, and the like.

The epoxy-based resins are not particularly restricted, and examples thereof include bisphenol-type epoxy resins, such as bisphenol A-type epoxy resins and bisphenol F-type epoxy resins; novolac-type epoxy resins, such as phenol-novolac type epoxy resins and cresol-novolac type epoxy resins; aliphatic epoxy resins; alicyclic epoxy resins;

polyfunctional epoxy resins; biphenyl-type epoxy resins; alcohol-type epoxy resins, such as glycidyl ether-type epoxy resins, glycidyl ester-type epoxy resins, glycidylamine-type epoxy resins, and hydrogenated bisphenol A-type epoxy resins; rubber-modified epoxy resins; and urethane-modified epoxy resins. These epoxy-based resins may be used singly, or two or more kinds thereof may be used in combination. Thereamong, as the epoxy-based resins, bisphenol-type epoxy resins, such as bisphenol A-type epoxy resins and bisphenol F-type epoxy resins, are more preferable since they are widely available in various grades having different molecular weights and their adhesiveness and reactivity can be set arbitrarily.

The phenolic resins are not particularly restricted, and examples thereof include condensates (e.g., alkylphenol-based resins and xylene formaldehyde-based resins) of various phenols (e.g., phenol, *m*-cresol, 3,5-xylenol, *p*-alkylphenol, and resorcin) and formaldehyde; resols obtained by addition-reaction of the various phenols described above and formaldehyde using an alkali catalyst; and novolacs obtained by condensation reaction of the various phenols described above and formaldehyde using an acid catalyst. These phenolic resins may be used singly, or two or more kinds thereof may be used in combination. Thereamong, as the phenolic resins, formaldehyde-based resins are more preferable because of their physical properties and workability.

In accordance with a coating method and a coating apparatus, the solvent-based adhesive may be arbitrarily diluted with a solvent to adjust the solid content. From the standpoints of, for example, easily forming the adhesive layer and ensuring the adhesion performance, the solvent-based adhesive preferably has as a solid content of from 5% by mass to 50% by mass after the dilution with a solvent.

The organic solvent used as a solvent is not particularly restricted, and may be selected as appropriate in accordance with the main component (i.e., principal ingredient) of the solvent-based adhesive. Specific examples of the organic solvent include alcohol-based solvents, such as methanol, ethanol, *n*-propyl alcohol, isopropyl alcohol, and *n*-butanol; aromatic hydrocarbon-based solvents, such as toluene and xylene; ether-based solvents, such as dioxane, tetrahydrofuran, and ethylene glycol dimethyl ether; ketone-based solvents, such as acetone, methyl ethyl ketone, methyl isobutyl ketone, and cyclohexanone; ester-based solvents, such as ethyl acetate, isopropyl acetate, and butyl acetate; glycol-based solvents, such as methyl glycol, ethyl glycol, and isopropyl glycol; acetonitrile; and *N,N*-dimethylformamide.

In the solvent-based adhesive, in addition to the above-described resin and the like contained as a main component, for example, an additive such as a tackifying resin, an antioxidant (e.g., an anti-aging agent) or a heat stabilizer may be incorporated as required.

Others

The tensile elastic modulus of the adhesive layer is not particularly restricted as long as it is smaller than the tensile elastic modulus of the resin layer, and it is, for example, from 1 MPa to 600 MPa. From the standpoint of riding comfort, the tensile elastic modulus of the adhesive layer is preferably from 1 MPa to 500 MPa, more preferably from 1 MPa to 400 MPa, still more preferably from 17 MPa to 157 MPa, particularly preferably from 25 MPa to 116 MPa.

The tensile elastic modulus of the adhesive layer can be measured in the same manner as the above-described method of measuring the tensile elastic modulus of the resin layer.

In a case in which the tensile elastic modulus of the adhesive layer is $E_1$ and the tensile elastic modulus of the resin layer is $E_2$, a value of $E_1/E_2$ is, for example, from 0.05 to 0.5, preferably from 0.05 to 0.3, more preferably from 0.05 to 0.2. By controlling the value of $E_1/E_2$ in this range, superior tire durability is attained as compared to a case in which the value of $E_1/E_2$ is smaller than the above-described range, and superior riding comfort during traveling is attained as compared to a case in which the value of $E_1/E_2$ is larger than the above-described range.

The average thickness of the adhesive layer is not particularly restricted; however, from the standpoints of the riding comfort during traveling and the tire durability, it is preferably from 5 μm to 500 μm, more preferably from 20 μm to 150 μm, still more preferably from 20 μm to 100 μm. A preferable range of the average thickness of the adhesive layer is, for example, from 80 μm to 103 μm, particularly from 92 μm to 103 μm.

The average thickness of the adhesive layer is defined as the number-average value of the thickness of the adhesive layer that is determined by taking SEM images at five arbitrary spots of a cross-section obtained by cutting the metal-resin complex along the layering direction of the metal member, the adhesive layer and the resin layer, and subsequently measuring the thickness of the adhesive layer on the thus obtained SEM images. The thickness of the adhesive layer on each SEM image is defined as the value measured at a part having the smallest thickness (i.e., a part where the distance between the metal member-adhesive layer interface and the adhesive layer-resin layer interface is the smallest).

In a case in which the average thickness of the adhesive layer is $T_1$ and the average thickness of the resin layer is $T_2$, a value of $T_1/T_2$ is, for example, from 0.1 to 0.5, preferably from 0.1 to 0.4, more preferably from 0.1 to 0.35, still more preferably from 0.26 to 0.35, particularly preferably from 0.30 to 0.35. By controlling the value of $T_1/T_2$ in this range, superior riding comfort during traveling is attained as compared to a case in which the value of $T_1/T_2$ is smaller than the above-described range, and superior tire durability is attained as compared to a case in which the value of

$T_1/T_2$ is larger than the above-described range.

The adhesive layer may also contain a component other than the adhesive. Examples of such other components include radical scavengers, rubbers, elastomers, thermoplastic resins, various fillers (e.g., silica, calcium carbonate, and clay), anti-aging agents , oils, plasticizers, colorants, and weathering agents.

<Tire Frame>

The tire frame contains a resin material. The resin material may be any material as long as it contains at least a resin (i.e., a resin component), and may also contain other component, such as an additive, within a range that does not impair the effects of the invention. It is noted here, however, that the content of the resin (i.e., the resin component) in the resin material is preferably 50% by mass or more, more preferably 90% by mass or more, with respect to the total amount of the resin material. The tire frame can be formed using the resin material.

The resin contained in the tire frame is, for example, a thermoplastic resin, a thermoplastic elastomer, or a thermosetting resin. From the standpoint of the riding comfort during traveling, the resin material preferably contains a thermoplastic elastomer, more preferably contains a polyamide-based thermoplastic elastomer.

Examples of the thermosetting resin include phenol-based thermosetting resins, urea-based thermosetting resins, melamine-based thermosetting resins, and epoxy-based thermosetting resins.

Examples of the thermoplastic resin include polyamide-based thermoplastic resins, polyester-based thermoplastic resins, olefin-based thermoplastic resins, polyurethane-based thermoplastic resins, vinyl chloride-based thermoplastic resins, and polystyrene-based thermoplastic resins. These thermoplastic resins may be used singly, or two or more kinds thereof may be used in combination. Thereamong, as the thermoplastic resin, at least one selected from the group consisting of polyamide-based thermoplastic resins, polyester-based thermoplastic resins, and olefin-based thermoplastic resins is preferable, and at least one selected from the group consisting of polyamide-based thermoplastic resins and olefin-based thermoplastic resins is more preferable.

Examples of the thermoplastic elastomer include polyamide-based thermoplastic elastomers (TPA), polystyrene-based thermoplastic elastomers (TPS), polyurethane-based thermoplastic elastomers (TPU), olefin-based thermoplastic elastomers (TPO), polyester-based thermoplastic elastomers (TPEE), thermoplastic rubber vulcanizates (TPV), and other thermoplastic elastomers (TPZ), all of which are defined in JIS K6418. Taking into consideration the elasticity required during traveling as well as the moldability in the production and the like, it is preferable to use a thermoplastic resin, and it is more preferable to use a thermoplastic elastomer, as the resin material forming the tire frame. In a case in which a polyamide-based thermoplastic resin is used as the resin layer contained in the metal-resin complex, it is preferable to use a polyamide-based thermoplastic elastomer.

-Polyamide-based Thermoplastic Elastomer-

The term "polyamide-based thermoplastic elastomer" means a thermoplastic resin material composed of a copolymer that contains a polymer constituting a crystalline and high-melting-point hard segment and a polymer constituting an amorphous and low-glass-transition-temperature soft segment, wherein the polymer constituting the hard segment has an amide bond (-CONH-) in its main chain.

Examples of the polyamide-based thermoplastic elastomer include materials in which at least a polyamide constitutes a crystalline and high-melting-point hard segment and other polymer (e.g., a polyester or a polyether) constitutes an amorphous and low-glass-transition-temperature soft segment. Further, the polyamide-based thermoplastic elastomer may be composed of, in addition to a hard segment and a soft segment, a chain extender such as a dicarboxylic acid.

Specific examples of the polyamide-based thermoplastic elastomer include amide-based thermoplastic elastomers (TPA) that are defined in JIS K6418:2007, and polyamide-based elastomers described in JP-ANo. 2004-346273.

In the polyamide-based thermoplastic elastomer, the polyamide constituting the hard segment is, for example, a polyamide formed from a monomer represented by the following Formula (1) or (2).

Formula (1) $H_2N-R^1-COOH$

In Formula (1), $R^1$ represents a hydrocarbon molecular chain having from 2 to 20 carbon atoms (e.g., an alkylene group having from 2 to 20 carbon atoms).

Formula (2)

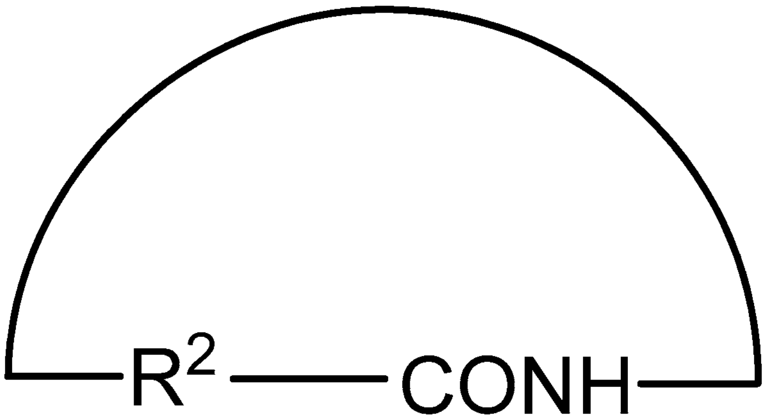

In Formula (2), $R^2$ represents a hydrocarbon molecular chain having from 3 to 20 carbon atoms (e.g., an alkylene group having from 3 to 20 carbon atoms).

In Formula (1), $R^1$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atoms (e.g., an alkylene group having from 4 to 15 carbon atoms), particularly preferably a hydrocarbon molecular chain having from 10 to 15 carbon atom (e.g., an alkylene group having from 10 to 15 carbon atoms).

In Formula (2), $R^2$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atom (e.g., an alkylene group having from 4 to 15 carbon atoms), particularly preferably a hydrocarbon molecular chain having from 10 to 15 carbon atoms (e.g., an alkylene group having from 10 to 15 carbon atoms).

Examples of the monomer represented by Formula (1) or (2) include $\omega$-aminocarboxylic acids and lactams. Examples of the polyamide constituting the hard segment include polycondensates of an $\omega$-aminocarboxylic acid and a lactam, and copolycondensates of a diamine and a dicarboxylic acid.

Examples of the $\omega$-aminocarboxylic acid include aliphatic $\omega$-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactam include aliphatic lactams having from 5 to 20 carbon atoms, such as lauryl lactam, $\varepsilon$-caprolactam, undecanelactam, $\omega$-enantholactam, and 2-pyrrolidone.

Examples of the diamine include aliphatic diamines having from 2 to 20 carbon atoms, and aromatic diamines having from 6 to 20 carbon atoms. Examples of the aliphatic diamines having from 2 to 20 carbon atoms and the aromatic diamines having from 6 to 20 carbon atoms include ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and *meta*-xylene diamine.

The dicarboxylic acid can be represented by $HOOC-(R^3)_m-COOH$ ($R^3$: a hydrocarbon molecular chain having from 3 to 20 carbon atoms, m: 0 or 1), and examples thereof include aliphatic dicarboxylic acids having from 2 to 20 carbon atoms, such as oxalic acid, succinic acid, glutaric acid, adipic acid, pimelic acid, suberic acid, azelaic acid, sebacic acid, and dodecanedioic acid.

As the polyamide constituting the hard segment, a polyamide obtained by ring-opening polycondensation of lauryl lactam, $\varepsilon$-caprolactam or undecanelactam can be preferably used.

Examples of the polymer which forms the soft segment include a polyester, and a polyether, and specifically, polyethylene glycol, polypropylene glycol, poly(tetramethylene ether) glycol, and an ABA-type triblock polyether. These may be used singly or in a combination of two or more kinds thereof. Further, a polyetherdiamine obtained by reacting ammonia or the like with the end of a polyether may be also used.

In this regard, the "ABA-type triblock polyether" means a polyether expressed by the following Formula (3).

Formula (3)

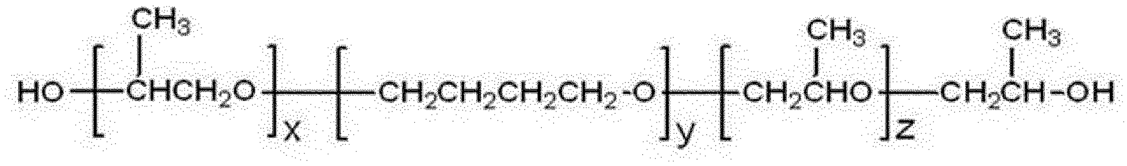

In Formula (3), x and z each represent an integer from 1 to 20. y represents an integer from 4 to 50.

In Formula (3), x and z are each preferably an integer from 1 to 18, more preferably an integer from 1 to 16, especially preferably an integer from 1 to 14, and most preferably an integer from 1 to 12. Further, in Formula (3), y is preferably an integer from 5 to 45, more preferably an integer from 6 to 40, especially preferably an integer from 7 to 35, and most preferably an integer from 8 to 30.

Examples of a combination of the hard segment and the soft segment include the combinations of the respective hard segment and the respective soft segment described above. Among them, as the combination of the hard segment and the soft segment, a combination of a ring-opening polycondensate of lauryl lactam and poly(ethylene glycol), a combination of a ring-opening polycondensate of lauryl lactam and poly(propylene glycol), a combination of a ring-opening polycondensate of lauryl lactam and poly(tetramethylene ether) glycol, and a combination of a ring-opening polycondensate of lauryl lactam and an ABA-ype triblock polyether are preferable, and a combination of a ring-opening polycondensate of lauryl lactam and an ABA type triblock polyether is especially preferable.

From the standpoint of the melt-moldability, the number-average molecular weight of the polymer (i.e., polyamide) constituting the hard segment is preferably from 300 to 15,000. Meanwhile, from the standpoints of the toughness and the low-temperature flexibility, the number-average molecular weight of the polymer constituting the soft segment is preferably from 200 to 6,000. Further, from the standpoint of the moldability, a mass ratio (x:y) of a hard segment (x) and a soft segment (y) is preferably from 50:50 to 90:10, more preferably from 50:50 to 80:20.

The polyamide-based thermoplastic elastomer can be synthesized by copolymerizing the polymer for forming the hard segment and the polymer for forming the soft segment by a publicly known method.

As a commercial product for the polyamide-based thermoplastic elastomer, for example, "UBE STAXPA" series (for example, XPA9063X1, XPA9055X1, XPA9048X2, XPA9048X1, XPA9040X1, and XPA9040X2XPA9044) from UBE Industries, Ltd., "VESTAMID" series (for example, E40-S3, E47-S1, E47-S3, E55-S1, E55-S3, EX9200, and E50-R2), from Daicel-Evonik Ltd., or the like may be used.

The polyamide-based thermoplastic elastomer is suitable as a resin material since it satisfies the performances required for a tire frame in terms of elastic modulus (i.e., flexibility), strength and the like. In addition, the polyamide-based thermoplastic elastomer often exhibits favorable adhesion with a thermoplastic resin and a thermoplastic elastomer. Therefore, in a case in which the polyamide-based thermoplastic elastomer is used as a resin material forming the tire frame, the degree of freedom in selecting a material of a coating composition tends to be increased because of the adhesiveness between the tire frame and the resin layer contained in metal-resin complex.

- Polystyrene-based thermoplastic elastomer -

Examples of the polystyrene-based thermoplastic elastomer include a material, in which at least polystyrene forms a hard segment, and another polymer (for example, polybutadiene, polyisoprene, polyethylene, hydrogenate polybutadiene, and hydrogenate polyisoprene) forms an amorphous soft segment with a low glass transition temperature. As the polystyrene which forms the hard segment, for example, one yielded by a publicly known method, such as a radical polymerization method or an ionic polymerization method, is favorably used, and one of specific examples is polystyrene having an anionic living polymer form. Examples of a polymer forming the soft segment include polybutadiene, polyisoprene, and poly(2,3-dimethylbutadiene).

Examples of a combination of the hard segment and the soft segment include the combinations of the respective hard segment and the respective soft segment described above. Among them, as the combination of the hard segment and the soft segment, a combination of polystyrene and polybutadiene, and a combination of polystyrene and polyisoprene is preferable. Further, the soft segment is preferably hydrogenated, so as to suppress unintended crosslinking of a thermoplastic elastomer.

The number average molecular weight of the polymer (polystyrene) forming the hard segment is preferably from 5,000 to 500,000, and more preferably from 10,000 to 200,000.

Meanwhile, the number average molecular weight of the polymer forming the soft segment is preferably from 5,000 to 1,000,000, more preferably from 10,000 to 800,000, and especially preferably from 30,000 to 500,000. Further, the volume ratio (x:y) of a hard segment (x) to a soft segment (y) is preferably from 5:95 to 80:20, and more preferably

from 10/90 to 70/30, from a viewpoint of formability.

The polystyrene-based thermoplastic elastomer can be synthesized by copolymerizing the polymer for forming the hard segment and the polymer for forming the soft segment by a publicly known method.

Examples of the polystyrene-based thermoplastic elastomer include a styrene/butadiene-based copolymer [SBS (polystyrene-poly(butylene) block-polystyrene), SEBS (polystyrene-poly(ethylene/butylene) block-polystyrene)], a styrene-isoprene copolymer (polystyrene-polyisoprene block-polystyrene), a styrene/propylene-based copolymer [SEP (polystyrene-(ethylene/propylene) block), SEPS (polystyrene-poly(ethylene/propylene) block-polystyrene), SEEPS (polystyrene-poly(ethylene-ethylene/propylene) block-polystyrene), and SEB (polystyrene (ethylene /butylene) block)].

As a commercial product for the polystyrene-based thermoplastic elastomer, for example, "TUFTEC" series (for example, H1031, H1041, H1043, H1051, H1052, H1053, H1062, H1082, H1141, H1221, and H1272) produced by Asahi Kasei Corporation, and "SEBS" series (8007, 8076, *etc.*), "SEPS" series (2002, 2063, *etc.*), *etc.* produced by Kuraray Co., Ltd. may be used.

- Polyurethane-based thermoplastic elastomer -

With respect to the polyurethane-based thermoplastic elastomer, for example, there is a material in which at least polyurethane forms a hard segment with pseudo-crosslinks formed by physical aggregation, and another polymer forms an amorphous soft segment with a low glass transition temperature.

Specific examples of the polyurethane-based thermoplastic elastomer include a polyurethane-based thermoplastic elastomer (TPU) as defined according to JIS K6418: 2007. A polyurethane-based thermoplastic elastomer can be expressed as a copolymer including a soft segment containing a unit structure expressed by the following Formula A, and a hard segment containing a unit structure expressed by the following Formula B.

Formula A

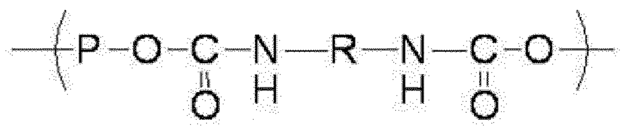

Formula B

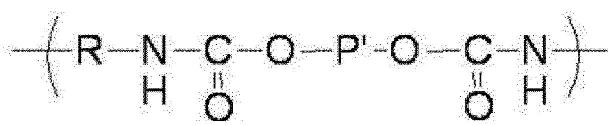

In Formulas, P represents a long-chain aliphatic polyether or a long-chain aliphatic polyester. R represents an aliphatic hydrocarbon, an alicyclic hydrocarbon, or an aromatic hydrocarbon. P' represents a short chain aliphatic hydrocarbon, an alicyclic hydrocarbon, or an aromatic hydrocarbon.

As the long-chain aliphatic polyether or the long-chain aliphatic polyester expressed by P in Formula A, for example, that with a molecular weight of from 500 to 5,000 may be used. P is originated from a diol compound containing a long-chain aliphatic polyether or a long-chain aliphatic polyester expressed as P. Examples of such a diol compound include polyethylene glycol, polypropylene glycol, poly(tetramethylene ether) glycol, poly(butylene adivate) diol, poly-ε-caprolactone diol, poly(hexamethylene carbonate) diol, and an ABA-type triblock polyether, molecular weight of which being within the above range.

These may be used singly or in a combination of two or more kinds thereof.

In Formulae A and B, R is a partial structure that is introduced using a diisocyanate compound containing the aliphatic, alicyclic or aromatic hydrocarbon represented by R. Example of the aliphatic diisocyanate compound containing the aliphatic hydrocarbon represented by R include 1,2-ethylene diisocyanate, 1,3-propylene diisocyanate, 1,4-butane diisocyanate, and 1,6-hexamethylene diisocyanate.

Examples of the diisocyanate compound containing the alicyclic hydrocarbon represented by R include 1,4-cyclohexane diisocyanate and 4,4-cyclohexane diisocyanate. Further, Examples of the aromatic diisocyanate compound containing the aromatic hydrocarbon represented by R include 4,4'-diphenylmethane diisocyanate and tolylene diisocyanate.

These diisocyanate compounds may be used singly, or two or more kinds thereof may be used in combination.

As the short chain aliphatic hydrocarbon, the alicyclic hydrocarbon, or the aromatic hydrocarbon expressed by P' in Formula B, for example, that having a molecular weight of smaller than 500 may be used. P' is originated from a

diol compound containing a short chain aliphatic hydrocarbon, an alicyclic hydrocarbon, or an aromatic hydrocarbon expressed by P'. Examples of the aliphatic diol compound containing a short chain aliphatic hydrocarbon expressed by P' include glycol, and a polyalkylene glycol, and specifically include ethylene glycol, propylene glycol, trimethylene glycol, 1,4-butanediol, 1,3-butanediol, 1,5-pentane diol, 1,6-hexane diol, 1,7-heptane diol, 1,8-octane diol, 1,9-nonane diol, and 1,10-decane diol.

Examples of the alicyclic diol compound containing an alicyclic hydrocarbon expressed by P' include cyclopentane-1,2-diol, cyclohexane-1,2-diol, cyclohexane-1,3-diol, cyclohexane-1,4-diol, and cyclohexane-1,4-dimethanol.

Further, examples of the aromatic diol compound containing an aromatic hydrocarbon expressed by P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenyl methane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These may be used singly or in a combination of two or more kinds thereof.

From the standpoint of the melt-moldability, the number-average molecular weight of the polymer (i.e., polyurethane) constituting the hard segment is preferably from 300 to 1,500. Meanwhile, from the standpoints of the flexibility and thermal stability of the polyurethane-based thermoplastic elastomer, the number-average molecular weight of the polymer constituting the soft segment is preferably from 500 to 20,000, more preferably from 500 to 5,000, particularly preferably from 500 to 3,000. Further, from the standpoint of the moldability, a mass ratio (x:y) of a hard segment (x) and a soft segment (y) is preferably from 15:85 to 90:10, more preferably from 30:70 to 90:10.

The polyurethane-based thermoplastic elastomer can be synthesized by copolymerizing the polymer for forming the hard segment and the polymer for forming the soft segment by a publicly known method. As the polyurethane-based thermoplastic elastomer, for example, a thermoplastic polyurethane described in JP-A No. H05-331256 can be used.

As the polyurethane-based thermoplastic elastomer, specifically, a combination of a hard segment composed of an aromatic diol and an aromatic diisocyanate and a soft segment composed of a polycarbonate ester is preferable, and more specifically at least one kind selected from the group consisting of a tolylene diisocyanate (TDI) / polyester-based polyol copolymer, a TDI / polyether-based polyol copolymer, a TDI / caprolactone-based polyol copolymer, a TDI / polycarbonate-based polyol copolymer, a 4,4'-diphenyl methane diisocyanate (MDI) / polyester-based polyol copolymer, a MDI / polyether-based polyol copolymer, a MDI / caprolactone-based polyol copolymer, a MDI / polycarbonate-based polyol copolymer, or a MDI+hydroquinone / poly(hexamethylene carbonate) copolymer is preferable, and at least one kind selected from the group consisting of a TDI / polyester-based polyol copolymer, a TDI / polyether-based polyol copolymer, a MDI / polyester polyol copolymer, a MDI / polyether-based polyol copolymer, or a MDI+hydroquinone / poly(hexamethylene carbonate) copolymer is more preferable.

As a commercial product for the polyurethane-based thermoplastic elastomer, for example, "ELASTOLLAN" series (for example, ET680, ET880, ET690, and ET890) produced by BASF SE, "KURAMILON U" series (for example, 2000s, 3000s, 8000s, and 9000s) produced by Kuraray Co., Ltd., and "MIRACTRAN" series (for example, XN-2001, XN-2004, P390RSUP, P480RSUI, P26MRNAT, E490, E590, and P890) produced by Nippon Miractran Co., Ltd. may be used.

- Olefin-based thermoplastic elastomer -

Examples of the olefin-based thermoplastic elastomer include a material in which at least a polyolefin forms a crystalline hard segment with a high melting temperature, and another polymer (for example, polyolefin, another polyolefin, and polyvinyl compound) forms an amorphous soft segment with a low glass transition temperature. Examples of the polyolefin forming a hard segment include polyethylene, polypropylene, isotactic polypropylene, and polybutene.

Examples of the olefin-based thermoplastic elastomer include an olefin-$\alpha$-olefin random copolymer and an olefin block copolymer, and specifically include a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, a 1-butene-1-hexene copolymer, 1-butene-4-methylpentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer.

Among them, as the olefin-based thermoplastic elastomer, at least one kind selected from the group consisting of a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, or a propylene-vinyl acetate copolymer is preferable, and at least one kind selected from the group consisting of an ethylene-propylene copolymer, a propylene-1-butene copolymer, an ethylene-1-butene copolymer, an ethylene-methyl methacrylate copolymer, an ethylene-methyl acrylate copolymer, an ethylene-ethyl acrylate copolymer, or an ethylene-butyl acrylate copolymer is more preferable.

A combination of two or more kinds of the olefin-based resins, such as ethylene and propylene may be used. The content of an olefin-based resin in an olefin-based thermoplastic elastomer is preferably from 50 mass-% to 100 mass-%.

The number average molecular weight of the olefin-based thermoplastic elastomer is preferably from 5,000 to 10,000,000. When the number average molecular weight of the olefin-based thermoplastic elastomer is from 5,000 to 10,000,000, the mechanical properties of a thermoplastic resin material can be adequate, and processability thereof is also superior. From a similar viewpoint, the number average molecular weight of an olefin-based thermoplastic elastomer is more preferably from 7,000 to 1,000,000, and especially preferably from 10,000 to 1,000,000. In this case, the mechanical properties and processability of the thermoplastic resin material can be improved. Meanwhile, the number average molecular weight of the polymer forming the soft segment is preferably from 200 to 6,000 from viewpoints of toughness and low temperature flexibility. Further, the mass ratio (x:y) of a hard segment (x) to a soft segment (y) is preferably from 50:50 to 95:15, and more preferably from 50:50 to 90:10, from a viewpoint of formability.

An olefin-based thermoplastic elastomer can be synthesized through copolymerization by a publicly known method.

As an olefin-based thermoplastic elastomer, a thermoplastic elastomer modified with an acid may be used.

An "olefin-based thermoplastic elastomer modified with an acid" means an olefin-based thermoplastic elastomer bound with an unsaturated compound having an acidic group, such as a carboxylic acid group, a sulfuric acid group, or a phosphoric acid group.

For the binding of the unsaturated compound having an acidic group, such as a carboxylic acid group, a sulfuric acid group, or a phosphoric acid group, to the olefin-based thermoplastic elastomer, for example, an unsaturated bond moiety of an unsaturated carboxylic acid (generally maleic anhydride) is bound (e.g., grafted) as the unsaturated compound having an acidic group to the olefin-based thermoplastic elastomer.

From the standpoint of inhibiting deterioration of the olefin-based thermoplastic elastomer, the unsaturated compound having an acidic group is preferably an unsaturated compound having a carboxylic acid group, which is a weak acid group. Examples of the unsaturated compound having a carboxylic acid group include acrylic acid, methacrylic acid, itaconic acid, crotonic acid, isocrotonic acid, and maleic acid.

As a commercial product for the olefin-based thermoplastic elastomer, for example, "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680) produced by Mitsui Chemicals, Inc., "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), and "ELVALOY AC" series (for example, 1125AC, 1209AC, 1218AC, 1609AC, 1820AC, 1913AC, 2112AC, 2116AC, 2615AC, 2715AC, 3117AC, 3427AC, and 3717AC), produced by Dupont-Mitsui Polychemicals Co., Ltd., "ACRYFT" series, "EVATATE" series, *etc.* from Sumitomo Chemical Co., Ltd., "ULTRATHENE" series, *etc.* produced by Tosoh Corporation, "PRIME TPO" series (for example, E-2900H, F-3900H, E-2900, F-3900, J-5900, E-2910, F-3910, J-5910, E-2710, F-3710, J-5910, E-2740, F-3740, R110MP, R110E, T310E, and M142E) produced by Prime Polymer Co., Ltd., *etc.* may be used.

- Polyester-based thermoplastic elastomer -

Examples of the polyester-based thermoplastic elastomer include a material in which at least a polyester forms a crystalline hard segment with a high melting temperature, and another polymer (for example, polyester, or polyether) forms an amorphous soft segment with a low glass transition temperature.

As the polyester constituting the hard segment, an aromatic polyester can be used. The aromatic polyester can be formed from, for example, an aromatic dicarboxylic acid or an ester-forming derivative thereof, and an aliphatic diol. The aromatic polyester is preferably a polybutylene terephthalate derived from 1,4-butanediol and at least one of terephthalic acid or dimethyl terephthalate. Alternatively, the aromatic polyester may be, for example, a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an

ester-forming derivative of these dicarboxylic acids) and a diol having a molecular weight of 300 or less (e.g., an aliphatic diol, such as ethylene glycol, trimethylene glycol, pentamethylene glycol, hexamethylene glycol, neopentyl glycol, or decamethylene glycol; an alicyclic diol, such as 1,4-cyclohexane dimethanol or tricyclodecane dimethylol; and an aromatic diol, such as xylylene glycol, bis(*p*-hydroxy)diphenyl, bis(*p*-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-*p*-terphenyl, or 4,4'-dihydroxy-*p*-quaterphenyl), or a copolyester obtained by using two or more of the above-described dicarboxylic acid components and diol components. It is also possible to copolymerize, for example, a polyfunctional carboxylic acid component, a polyfunctional oxyacid component or a polyfunctional hydroxy component, which has three or more functional groups, in a range of 5% by mole or less.

Examples of the polyester constituting the hard segment include polyethylene terephthalate, polybutylene terephthalate, polymethylene terephthalate, polyethylene naphthalate, and polybutylene naphthalate, among which polybutylene terephthalate is preferable.

Examples of the polymer forming the soft segment include, an aliphatic polyester and an aliphatic polyether.

Examples of the aliphatic polyether include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly(propylene oxide) glycol, and a copolymer of ethylene oxide and tetrahydrofuran.

Examples of the aliphatic polyester include poly(ε-caprolactone), polyenantholactone, polycaprylolactone, poly(butylene adipate), and poly(ethylene adipate).

Among the aliphatic polyethers and the aliphatic polyesters, as the polymer forming the soft segment, poly(tetramethylene oxide) glycol, an ethylene oxide addition product of poly(propylene oxide) glycol, poly(ε-caprolactone), poly(butylene adipate), and poly(ethylene adipate), and the like are preferable from a viewpoint of the elasticity characteristic of an obtained polyester block copolymer.

The number average molecular weight of the polymer forming the soft segment is preferably from 300 to 6,000 from viewpoints of toughness and low temperature flexibility. Further, the mass ratio (x:y) of a hard segment (x) to a soft segment (y) is preferably from 99:1 to 20:80 from a viewpoint of formability, and more preferably from 98:2 to 30:70.

Examples of a combination of the hard segment and the soft segment include the combinations of the respective hard segment and the respective soft segment described above. Among them, as the combination of the hard segment and the soft segment a combination of poly(butylene terephthalate) as a hard segment and an aliphatic polyether as a soft segment is preferable, and a combination of poly(butylene terephthalate) as a hard segment and poly(ethylene oxide) glycol as a soft segment is more preferable.

As a commercial product for the polyester-based thermoplastic elastomer, for example, "HYTREL" series (for example, 3046, 5557, 6347, 4047, and 4767) from Du Pont-Toray Co., Ltd., and "PELPRENE" series (for example, P30B, P40B, P40H, P55B, P70B, P150B, P280B, P450B, P150M, S1001, S2001, S5001, S6001, and S9001) produced by Toyobo Co., Ltd. may be used.

The polyester-based thermoplastic elastomer can be synthesized by copolymerizing the polymer for forming the hard segment and the polymer for forming the soft segment by a publicly known method.

-Other Components-

The resin material may also contain a component other than the resin as desired. Examples of such other components include rubbers, various fillers (e.g., silica, calcium carbonate, and clay), anti-aging agents, oils, plasticizers, colorants, weathering agents, and reinforcing materials.

-Physical Properties of Resin Material-

The melting point of the resin contained in the resin material is, for example, preferably from 100°C to about 350°C and, from the standpoints of durability and productivity of the tire, it is preferably from 100°C to about 250°C, more preferably from 120°C to 250°C.

The tensile elastic modulus, which is defined in JIS K7113:1995, of the resin material (i.e., tire frame) itself is preferably from 50 MPa to 1,000 MPa, more preferably from 50 MPa to 800 MPa, particularly preferably from 50 MPa to 700 MPa. In a case in which the tensile elastic modulus of the resin material is from 50 MPa to 1,000 MPa, the tire can be efficiently fitted to a rim while maintaining the shape of the tire frame.

The tensile strength, which is defined in JIS K7113 (1995), of the resin material (i.e., tire frame) itself is usually from about 15 MPa to about 70 MPa, preferably from 17 MPa to 60 MPa, more preferably from 20 MPa to 55 MPa.

The tensile strength at yield, which is defined in JIS K7113 (1995), of the resin material (i.e., tire frame) itself is preferably 5 MPa or greater, more preferably from 5 MPa to 20 MPa, particularly preferably from 5 MPa to 17 MPa. In a case in which the tensile strength at yield of the resin material is 5 MPa or greater, the tire can endure deformation caused by a load applied to the tire during traveling or the like.

The tensile elongation at yield, which is defined in JIS K7113 (1995), of the resin material (i.e., tire frame) itself is preferably 10% or greater, more preferably from 10% to 70%, particularly preferably from 15% to 60%. In a case in which the tensile elongation at yield of the resin material is 10% or greater, a large elastic region is provided, so that favorable rim fittability can be attained.

The tensile elongation at break, which is defined in JIS K7113 (1995), of the resin material (i.e., tire frame) itself is preferably 50% or greater, more preferably 100% or greater, particularly preferably 150% or greater, most preferably 200% or greater. In a case in which the tensile elongation at break of the resin material is 50% or greater, favorable rim fittability can be attained, and the tire can be made unlikely to rupture at collision.

The deflection temperature under load (under a load of 0.45 MPa), which is defined in ISO75-2 or ASTM D648, of the resin material (i.e., tire frame) itself is preferably 50°C or higher, more preferably from 50°C to 150°C, particularly preferably from 50°C to 130°C. With the deflection temperature under load of the resin material being 50°C or higher, deformation of the tire frame can be inhibited even when vulcanization is performed in the production of the tire.

Hereinafter, the tires according to embodiments of the invention are described referring to the drawings. It is noted here that the drawings provided below (i.e., FIGs. 1A, 1B, 2, and 3) are schematic drawings and that, in order to facilitate the understanding, the sizes and shapes of the respective components are exaggerated as appropriate. Further, a metal-resin complex is applied as a belt portion in the below-described embodiments; however, the metal-resin complex may also be applied to other parts, such as bead portions, in addition to the belt portion.

<First Embodiment>

First, a tire 10 according to a first embodiment of the invention is described below referring to FIGs. 1A and 1B.

FIG. 1A is a perspective view illustrating a cross-section of a part of the tire according to the first embodiment. FIG. 1B is a cross-section of a bead portion fitted to a rim. As illustrated in FIG. 1A, the tire 10 of the first embodiment has a cross-sectional shape that is substantially the same as those of conventional ordinary rubber-made pneumatic tires.

The tire 10 includes a tire frame 17, which includes: a pair of bead portions 12, which are each in contact with a bead sheet 21 and a rim flange 22 of a rim 20; side portions 14, which extend on the tire radial-direction outer side from the respective bead portions 12; and a crown portion (i.e., outer circumferential portion) 16, which connects the tire radial-direction outer end of one side portion 14 with the tire radial-direction outer end of the other side portion 14. The tire frame 17 is formed from a resin material (e.g., a polyamide-based thermoplastic elastomer).

The tire frame 17 is formed by aligning annular tire frame half sections (i.e., tire frame pieces) 17A, which have the same shape and are each formed by integrally injection-molding one bead portion 12, one side portion 14 and a half-width crown portion 16, to face each other and joining them at the tire equatorial plane.

In each of the bead portions 12, an annular bead core 18 composed of a steel cord is embedded in the same manner as in conventional ordinary pneumatic tires. Further, an annular sealing layer 24 formed from a rubber that is a material having superior sealing performance than the resin material included in the tire frame 17 is formed on a part of each bead portion 12 that comes into contact with the rim 20, or at least on a part of each bead portion 12 that comes into contact with the rim flange 22 of the rim 20.

On the crown portion 16, a metal-resin complex 26, which is a reinforcing cord, is spirally wound in the circumferential direction of the tire frame 17 with at least a part thereof being embedded in the crown portion 16 in a cross-sectional view taken along the axial direction of the tire frame 17. On the tire radial-direction outer circumferential side of the metal-resin complex 26, a tread 30 composed of a rubber that is a material having superior abrasion resistance than the resin material included in the tire frame 17 is arranged. The details of the metal-resin complex 26 are described below.

According to the tire 10 of the first embodiment, since the tire frame 17 is formed from a resin material, vulcanization thereof is not required, which is different from conventional rubber-made tire frames; therefore, the production process can be greatly simplified and the molding time can be shortened. In addition, since the tire frame half sections 17A have a bilaterally symmetrical shape, that is, one of the tire frame half sections 17A has the same shape as the other tire frame half section 17A, there is an advantage that only one type of mold is required for molding the tire frame half sections 17A.

In the tire 10 of the first embodiment, the tire frame 17 is formed from a single resin material; however, the invention is not restricted to this embodiment, and resin materials having different characteristics may be used for the respective parts of the tire frame 17 (e.g., the side portions 14, the crown portion 16, and the bead portions 12) as in conventional ordinary rubber-made pneumatic tires. Further, a reinforcing material (e.g., polymer material-made or metal-made fibers, cords, nonwoven fabric, or woven fabric) may be embedded in the respective parts of the tire frame 17 (e.g., the side portions 14, the crown portion 16, and the bead portions 12) so as to reinforce the tire frame 17 with the reinforcing material.

In the tire 10 of the first embodiment, the tire frame half sections 17A are each molded by injection molding; however, the invention is not restricted to this embodiment, and the tire frame half sections 17A may be molded by, for

example, vacuum molding, pressure molding, or melt casting. Further, in the tire 10 of the first embodiment, the tire frame 17 is formed by joining two members (i.e., the tire frame half sections 17A); however, the invention is not restricted to this embodiment, and the tire frame may be formed as a single member by a melted core method, split core method or blow molding using a low-melting-point metal, or may be formed by joining three or more members.

In each bead portion 12 of the tire 10, an annular bead core 18 composed of a steel cord is embedded. Other than a steel cord, the bead core 18 may also be formed from an organic fiber cord, a resin-coated organic fiber cord, or a hard resin. It is noted here that the bead core 18 may be omitted as long as the rigidity of the bead portions 12 is ensured and there is no problem in fitting the bead portions 12 with the rim 20.

An annular sealing layer 24 composed of a rubber is formed on a part of each bead portion 12 that comes into contact with the rim 20, or at least on a part of each bead portion 12 that comes into contact with the rim flange 22 of the rim 20. The sealing layer 24 may also be formed on those parts where the tire frame 17 (specifically, bead portions 12) comes into contact with the bead sheet 21. In cases in which a rubber is used as the material for forming the sealing layer 24, it is preferable to use a rubber of the same kind as the rubbers used on the outer surfaces of the bead portions of conventional ordinary rubber-made pneumatic tires. The sealing layer 24 composed of a rubber may be omitted as long as the resin material forming the tire frame 17 alone can ensure sealing performance with the rim 20.

The sealing layer 24 may also be formed using other thermoplastic resin or thermoplastic elastomer that has superior sealing performance than the resin material forming the tire frame 17. Examples of such other thermoplastic resin include resins such as polyurethane-based resins, olefin-based resins, polystyrene-based resins, and polyester resins; and blends of these resins with a rubber or an elastomer. It is also possible to use a thermoplastic elastomer, and examples thereof include polyester-based thermoplastic elastomers, polyurethane-based thermoplastic elastomers, olefin-based thermoplastic elastomers, combinations of these elastomers, and blends of these elastomers with a rubber.

Next, the metal-resin complex 26 is described referring to FIG. 2. FIG. 2 is a cross-sectional view taken along the rotation axis of the tire 10 of the first embodiment, which illustrates a state where the metal-resin complex 26 is embedded in the crown portion of the tire frame 17.

As illustrated in FIG. 2, in a cross-sectional view taken along the axial direction of the tire frame 17, the metal-resin complex 26 is spirally wound with at least a part thereof being embedded in the crown portion 16. The part of the metal-resin complex 26 that is embedded in the crown portion 16 is in close contact with the resin material included in the crown portion 16 (i.e., the tire frame 17). A symbol "L" in FIG. 2 indicates the embedding depth of the metal-resin complex 26 in the tire rotation axis direction with respect to the crown portion 16 (i.e., the tire frame 17). In one embodiment, the embedding depth L of the metal-resin complex 26 in the crown portion 16 is 1/2 of the diameter D of the metal-resin complex 26.

The metal-resin complex 26 has a structure in which the outer circumference of a metal member 27 (e.g., a steel cord composed of twisted steel fibers) serving as a core is covered with a resin layer 28 (e.g., a coating composition containing a thermoplastic elastomer) via an adhesive layer 25.

On the tire radial-direction outer circumferential side of the metal-resin complex 26, the rubber-made tread 30 is arranged. Further, on the surface of the tread 30 that comes into contact with the road surface, a tread pattern constituted by plural grooves is formed in the same manner as in conventional rubber-made pneumatic tires.

In the tire 10 of one embodiment, the metal-resin complex 26 covered with the resin layer 28 containing a thermoplastic elastomer is embedded in close contact with the tire frame 17 formed from a resin material containing a thermoplastic elastomer of the same kind. Accordingly, the contact area between the resin layer 28 covering the metal member 27 and tire frame 17 is increased, and the adhesion durability between the metal-resin complex 26 and the tire frame 17 is thus improved, as a result of which the tire exhibits excellent durability.

The embedding depth L of the metal-resin complex 26 in the crown portion 16 is preferably 1/5 or greater, more preferably greater than 1/2, of the diameter D of the metal-resin complex 26. It is still more preferable that the entirety of the metal-resin complex 26 is embedded in the crown portion 16. When the embedding depth L of the metal-resin complex 26 is greater than 1/2 of the diameter D of the metal-resin complex 26, the metal-resin complex 26 is unlikely to come out of the embedded portion because of the dimensions of the metal-resin complex 26. Further, when the entirety of the metal-resin complex 26 is embedded into the crown portion 16, since the surface (specifically, the outer circumferential surface) is made flat, entry of air to the periphery of the metal-resin complex 26 can be inhibited even if a member is arranged on the crown portion 16 where the metal-resin complex 26 is embedded.

The thickness of the resin layer 28 covering the metal member 27 is not particularly restricted, and the average layer thickness is preferably from 0.2 mm to 4.0 mm, more preferably from 0.5 mm to 3.0 mm, particularly preferably from 0.5 mm to 2.5 mm.

In the tire 10 of the first embodiment, the tread 30 is formed from a rubber; however, in place of a rubber, a tread formed from other kind of thermoplastic resin material that has superior abrasion resistance than the resin material included in the tire frame 17 may be used as well.

A method of producing the tire of the first embodiment is described below.

*Tire Frame Molding Step*

First, tire frame half sections each supported on a thin metal support ring are aligned to face each other. Subsequently, a joining mold is placed such that it comes into contact with the outer circumferential surfaces of the abutting parts of the tire frame half sections. It is noted here that the joining mold is configured to press the peripheries of the joining parts (i.e., abutting parts) of the tire frame half sections with a prescribed pressure (not illustrated). Then, the peripheries of the joining parts of the tire frame half sections are pressed at a temperature equal to or higher than a temperature of the melting point (or softening point) of the thermoplastic resin material (e.g., a polyamide-based thermoplastic elastomer) forming the resulting tire frame. When the joining parts of the tire frame half sections are heated and pressurized by the joining mold, the joining parts are melted and the tire frame half sections are fused together, as a result of which these members are integrated to form the tire frame 17.

*Metal-Resin Complex Molding Step*

Next, the metal-resin complex molding step is described. A case in which the adhesive used for the formation of an adhesive layer is a hot-melt adhesive is described below as one example; however, the invention is not restricted thereto.

First, the metal member 27 is unwound from, for example, a reel, and the surface thereof is washed. Subsequently, the outer circumference of the metal member 27 is coated with a hot-melt adhesive (e.g., an adhesive containing an acid-modified olefin-based resin) extruded from an extruder to form a layer as the adhesive layer 25. Then, the surface of the thus formed layer is further coated with a resin (e.g., a polyamide-based thermoplastic elastomer) extruded from an extruder, whereby the metal-resin complex 26, in which the outer circumference of the metal member 27 is covered with the resin layer 28 via the adhesive layer 25, is formed. Thereafter, the thus formed metal-resin complex 26 is wound on a reel 58.

*Resin-coated Cord Winding Step*

The metal-resin complex winding step is described below referring to FIG. 3. FIG. 3 is a drawing for explaining operations of arranging the metal-resin complex on the crown portion of the tire frame using a metal-resin complex heating device and rollers. In FIG. 3, a metal-resin complex feeding apparatus 56 includes: the reel 58, on which the metal-resin complex 26 is wound; a metal-resin complex heating device 59, which is arranged on the cord transfer direction downstream side of the reel 58; a first roller 60, which is arranged on the metal-resin complex 26 transfer direction downstream side; a first cylinder device 62, which moves the first roller 60 in a direction toward or away from the tire outer circumferential surface; a second roller 64, which is arranged on the metal-resin complex 26 transfer direction downstream side of the first roller 60; and a second cylinder device 66, which moves the second roller 64 in a direction toward or away from the tire outer circumferential surface. The second roller 64 can be utilized as a cooling roller made of a metal. Further, the surface of the first roller 60 or the surface of the second roller 64 is coated with a fluororesin (e.g., TEFLON, registered trademark) so as to inhibit adhesion of the melted or softened resin material. As a result of which, the heated metal-resin complex is firmly integrated with the resin of the tire frame.

The metal-resin complex heating device 59 includes a heater 70 and a fan 72, which generate hot air. In addition, the metal-resin complex heating device 59 includes: a heating box 74, to which hot air is supplied and in which the metal-resin complex 26 passes through the inner space; and a discharge outlet 76, through which the thus heated metal-resin complex 26 is discharged.

In this step, first, the temperature of the heater 70 of the metal-resin complex heating device 59 is increased, and the ambient air heated by the heater 70 is sent to the heating box 74 by an air flow generated by rotation of the fan 72. Then, the metal-resin complex 26 unwound from the reel 58 is transferred into the heating box 74 whose inner space has been heated with hot air, whereby the metal-resin complex 26 is heated (for example, the temperature of the metal-resin complex 26 is increased to about 100°C to about 250°C). The thus heated metal-resin complex 26 passes through the discharge outlet 76 and is spirally wound with a constant tension around the outer circumferential surface of the crown portion 16 of the tire frame 17 rotating in the direction of an arrow R as illustrated in FIG. 3. Here, once the resin layer of the heated metal-resin complex 26 comes into contact with the outer circumferential surface of the crown portion 16, the resin material of the part in contact is melted or softened, and thereby melt-joined to the resin of the tire frame and integrated into the outer circumferential surface of the crown portion 16. In this process, since the metal-resin complex is also melt-joined with the metal-resin complex adjacent thereto, the winding is performed with no gap. As a result of which, entry of air into the parts where the metal-resin complex 26 is embedded is inhibited.

The embedding depth L of the metal-resin complex 26 can be adjusted by changing the heating temperature of the metal-resin complex 26, the tension acting on the metal-resin complex 26, the pressure applied by the first roller 60, and the like. In one embodiment, the embedding depth L of the metal-resin complex 26 is set to be 1/5 or greater of

the diameter D of the metal-resin complex 26.

Next, the tread 30 in a belt form is wound around the outer circumferential surface of the tire frame 17 in which the metal-resin complex 26 has been embedded, and the resultant is heated (i.e., vulcanized) in a vulcanization can or a mold. The tread 30 may be composed of an unvulcanized rubber or a vulcanized rubber.

Thereafter, the sealing layer 24, which is composed of a vulcanized rubber, is bonded to each bead portion 12 of the tire frame 17 using an adhesive or the like, whereby the tire 10 is completed.

In the method of producing the tire of the first embodiment, the joining parts of the tire frame half sections 17A are heated using a joining mold; however, the invention is not restricted to this embodiment, and the tire frame half sections 17A may be joined together by, for example, heating the joining parts using a separately arranged high-frequency heater or the like, or softening or melting the joining parts in advance by irradiation with hot air, infrared radiation or the like, and subsequently applying a pressure to the joining parts using a joining mold.

In the method of producing the tire of the first embodiment, the metal-resin complex feeding apparatus 56 has two rollers, which are the first roller 60 and the second roller 64; however, the invention is not restricted to this configuration, and the metal-resin complex feeding apparatus 56 may have only one of these rollers (i.e., a single roller).

In the method of producing the tire of the first embodiment, an aspect in which the metal-resin complex 26 is heated and the thus metal-resin complex 26 melts or softens the part of the surface of the tire frame 17 that is in contact with the metal-resin complex 26 is adopted; however, the invention is not restricted to this embodiment, and a configuration in which, without heating the metal-resin complex 26, the outer circumferential surface of the crown portion 16 where the metal-resin complex 26 is to be embedded is heated using a hot air-generating apparatus and the metal-resin complex 26 is subsequently embedded in the crown portion 16, may be adopted as well.

Further, in the method of producing the tire of the first embodiment, an aspect in which the heat source of the metal-resin complex heating device 59 includes the heater and the fan is adopted; however, the invention is not restricted to this embodiment, and an aspect in which the metal-resin complex 26 is directly heated by radiant heat (e.g., infrared radiation) may be adopted as well.

Moreover, in the method of producing the tire of the first embodiment, an aspect in which melted or softened parts of the thermoplastic resin material where the metal-resin complex 26 is embedded are forcibly cooled by the second roller 64 made of a metal is adopted; however, the invention is not restricted to this embodiment, and an aspect in which cold air is directly blown to the parts where the thermoplastic resin material has been melted or softened and the melted and softened parts of the thermoplastic resin material is thereby forcibly cooled may be adopted as well.

From the production standpoint, it is easy to spirally wind the metal-resin complex 26; however, for example, a method of arranging the metal-resin complex 26 discontinuously in the width direction may also be contemplated.

In the method of producing the tire of the first embodiment, an aspect in which the belt-form tread 30 is wound around the outer circumferential surface of the tire frame 17 where the metal-resin complex 26 has been embedded and the tread 30 is subsequently heated (i.e., vulcanized) is adopted; however, the invention is not restricted to this embodiment, and an aspect in which a vulcanized belt-form tread is bonded on the outer circumferential surface of the tire frame 17 using an adhesive or the like may be adopted as well. Examples of the vulcanized belt-form tread include precured treads that are used in retreaded tires.

The tire 10 of the first embodiment is a so-called tubeless tire in which an air chamber is formed between the tire 10 and the rim 20 by fitting the bead portions 12 to the rim 20; however, the invention is not restricted to this embodiment, and the tire in the invention may assume a complete tube shape.

Thus far, the invention has been described referring to embodiments; however, these embodiments are merely examples, and the invention can be carried out with various modifications within a range that does not depart from the scope of the claims of the invention. It is to be understood that the invention is not limited to these embodiments and its scope is defined by the claims.

The tire according to one embodiment of the invention encompasses tires of the following aspects.

<1> A tire including: a circular tire frame containing a resin material; and a metal-resin complex, wound around an outer circumferential portion of the tire frame, which includes a metal member, an adhesive layer and a resin layer in this order, wherein resin encompasses thermoplastic resins, thermoplastic elastomers and thermosetting resins, but not vulcanized rubbers, and characterised in that a tensile elastic modulus of the adhesive layer is less than a tensile elastic modulus of the resin layer.

<2> The tire according to <1>, wherein, in a case in which the tensile elastic modulus of the adhesive layer is $E_1$ and the tensile elastic modulus of the resin layer is $E_2$, a value of $E_1/E_2$ is from 0.05 to 0.5.

<3> The tire according to <1> or <2>, wherein: the tensile elastic modulus of the adhesive layer is from 1 MPa to 600 MPa, and the tensile elastic modulus of the resin layer is from 50 MPa to 1,000 MPa.

<4> The tire according to any one of <1> to <3>, wherein the adhesive layer contains at least one of an acid-modified olefin-based resin or an acid-modified polyester-based resin.

<5> The tire according to any one of <1> to <4>, wherein the resin layer contains a thermoplastic elastomer.

<6> The tire according to any one of <1> to <5>, wherein the resin layer contains at least one of a polyamide-based thermoplastic resin, a polyamide-based thermoplastic elastomer, a polyester-based resin, or a polyester-based thermoplastic elastomer.
<7> The tire according to any one of <1> to <6>, wherein, in a case in which an average thickness of the adhesive layer is $T_1$ and an average thickness of the resin layer is $T_2$, a value of $T_1/T_2$ is from 0.1 to 0.5.
<8> The tire according to any one of <1> to <7>, wherein an average thickness of the adhesive layer is from 5 μm to 500 μm.
<9> The tire according to any one of <1> to <8>, wherein an average thickness of the resin layer is from 10 μm to 1,000 μm.
<10> The tire according to any one of <1> to <9>, wherein the resin material contains at least one of a polyamide-based thermoplastic resin, a polyamide-based thermoplastic elastomer, a polyester-based resin, or a polyester-based thermoplastic elastomer.
<11> The tire according to any one of <1> to <10>, wherein: the resin material contains at least one of a polyamide-based thermoplastic resin or a polyamide-based thermoplastic elastomer, and the resin layer contains at least one of a polyamide-based thermoplastic resin or a polyamide-based thermoplastic elastomer.
<12> The tire according to any one of <1> to <11>, wherein the metal member has a thickness of from 0.2 mm to 2 mm.
<13> The tire according to any one of <1> to <12>, wherein the metal member is a twisted strand of plural cords.
<14> The tire according to <13>, wherein the number of the plural cords is from 2 to 10.
<15> The tire according to any one of <1> to <14>, wherein the metal-resin complex is arranged in a form of plural cords on the outer circumferential portion of the tire frame along the tire circumferential direction, and an average distance between metal members of adjacent metal-resin complexes is from 400 μm to 3,200 μm.

EXAMPLES

The invention is spefificaly described below by way of examples thereof; however, the invention is not restricted thereto by any means.

Example 1

*Preparation of Metal-Resin Complex*

In accordance with the above-described metal-resin complex molding step in the method of producing the tire of the first embodiment, an adhesive A-1 shown in Table 1 was heat-melted and adhered to a multifilament having an average diameter (φ) of 1.15 mm (a twisted strand obtained by twisting seven φ0.35-mm monofilaments (made of steel, strength: 280 N, elongation: 3%)), whereby a layer serving as an adhesive layer was formed.

Then, the outer circumference of the thus formed layer serving as an adhesive layer was coated with a thermoplastic elastomer N-1 shown in Table 1 that was extruded from an extruder and adhered thereto, and the resultant was subsequently cooled. As for the extrusion conditions, the temperature of the metal member and the temperature of the polyamide-based thermoplastic elastomer were set at 200°C and 240°C, respectively, and the extrusion rate was set at 30 m/min.

In the above-described manner, a metal-resin complex having a structure in which the outer circumference of the multifilament (i.e., metal member) was coated with the resin layer formed from the thermoplastic elastomer N-1 via the adhesive layer formed from the adhesive A-1 was prepared. The average thickness of the adhesive layer and the average thickness of the resin layer in the thus obtained metal-resin complex are shown in Table 1.

*Production of Tire Having Metal-Resin Complex*

In accordance with the above-described method of producing the tire of the first embodiment, a tire frame formed from a resin material composed of the thermoplastic elastomer N-1 shown in Table 1 was prepared. Subsequently, using the thus obtained metal-resin complex and tire frame, a green tire in which the metal-resin complex was wound on the crown portion of the tire frame and an unvulcanized tread rubber was arranged thereon was produced. The metal-resin complex was arranged on the tire frame such that the average distance between the metal members of adjacent metal-resin complexes was 1,000 μm. The tire size was 245/35R18. The thickness of the tread rubber was set at 10 mm.

The thus produced green tire was heated (specifically, the tread rubber was vulcanized) at 170°C for 18 minutes.

*Measurement of Elastic Modulus*

Separately from the above-described tire production, an elastic modulus measurement sample reproducing

the above-described conditions of the heating of the tire (specifically, the vulcanization of the tread rubber) was prepared.

Specifically, a 2 mm-thick plate was formed using the thermoplastic elastomer N-1 shown in Table 1 by injection molding, and a JIS #3 dumbbell test piece was punched out therefrom to prepare a resin layer elastic modulus measurement sample. Further, in the same manner, a 2 mm-thick plate was formed using the adhesive A-1 shown in Table 1 by injection molding, and a JIS #3 dumbbell test piece was punched out therefrom to prepare an adhesive layer elastic modulus measurement sample.

In order to apply the same thermal history to these samples as that applied to a tire, for a tire subjected to vulcanization under the same conditions as those tires of Examples and Comparative Examples, the temperature of the adhesive layer portion of the metal-resin complex in the vicinity of the tire centerline was measured during the vulcanization, and the samples were heat-treated at the thus measured temperature for a duration of the time required for the vulcanization. The thus heat-treated samples were defined as "sample for measurement of the resin layer elastic modulus" and "sample for measurement of the adhesive layer elastic modulus", respectively.

Using the thus obtained "sample for measurement of the resin layer elastic modulus" and "sample for measurement of the adhesive layer elastic modulus", the tensile elastic modulus was measured for each of the resin layer and the adhesive layer in accordance with the above-described method. The results thereof are shown in Table 1.

Examples 2 to 7, and Comparative Examples 1 to 5

Each tire was produced in the same manner as in Example 1, except that the adhesive used for the formation of an adhesive layer, the thermoplastic elastomer used for the formation of a resin layer, and the thermoplastic elastomer used for the formation of a tire frame were changed to those shown in Table 1 or 2. The average thickness of the adhesive layer and the average thickness of the resin layer in each metal-resin complex are shown in Tables 1 and 2.

Further, in the same manner as in Example 1, a "sample for measurement of the resin layer elastic modulus" and a "sample for measurement of the adhesive layer elastic modulus" were prepared, and the tensile elastic modulus was measured for each of the resin layer and the adhesive layer. The results thereof are shown in Tables 1 and 2.

*Evaluation of Riding Comfort during Traveling*

A subject tire fitted with a rim was mounted on a vehicle, and the tire was heated to 23°C using a tire warmer. Then, the vehicle wearing the tire was driven by an experienced test driver on a test course.

The riding comfort during traveling was sensory evaluated by the experienced test driver based on the following criteria. The results thereof are shown in Tables 1 and 2.

A: Vibrations from the road surface that were felt were small, and the riding comfort was favorable.
B: Vibrations from the road surface were felt; however, the riding comfort was in an acceptable range.
C: The tire was not satisfactory, or large vibrations from the road surface were felt.

Table 1

| | | Example 1 | Example 2 | Example 3 | Example 4 | Example 5 | Example 6 | Example 7 |
|---|---|---|---|---|---|---|---|---|
| Tire frame-forming material | | N-1 | N-1 | N-1 | N-2 | N-2 | N-1 | N-2 |
| Resin layer | Material | N-1 | N-1 | N-1 | N-2 | N-2 | N-1 | N-2 |
| | Average thickness (μm) | 310 | 305 | 290 | 295 | 302 | 310 | 300 |
| | Tensile elastic modulus (MPa) | 335 | 335 | 335 | 217 | 217 | 335 | 217 |

(continued)

| | | Example 1 | Example 2 | Example 3 | Example 4 | Example 5 | Example 6 | Example 7 |
|---|---|---|---|---|---|---|---|---|
| Adhesive layer | Material | A-1 | A-2 | A-3 | A-3 | A-4 | A-5 | A-5 |
| | Average thickness (μm) | 80 | 85 | 95 | 103 | 92 | 93 | 95 |
| | Tensile elastic modulus (MPa) | 157 | 116 | 43 | 43 | 17 | 25 | 25 |
| Riding comfort | | B | B | A | A | A | A | A |

Table 2

| | | Comparative Example 1 | Comparative Example 2 | Comparative Example 3 | Comparative Example 4 | Comparative Example 5 |
|---|---|---|---|---|---|---|
| Tire frame-forming material | | N-1 | N-1 | N-1 | N-1 | N-2 |
| Resin layer | Material | N-1 | N-1 | N-1 | N-1 | N-2 |
| | Average thickness (μm) | 298 | 295 | 305 | 312 | 287 |
| | Tensile elastic modulus (MPa) | 335 | 335 | 335 | 335 | 217 |
| Adhesive layer | Material | B-1 | B-2 | B-3 | B-4 | B-1 |
| | Average thickness (μm) | 93 | 88 | 80 | 97 | 85 |
| | Tensile elastic modulus (MPa) | 781 | 1,353 | 1,528 | 2,700 | 781 |
| Riding comfort | | C | C | C | C | C |

The components shown in Tables above are as follows.

- N-1: polyamide-based thermoplastic elastomer (manufactured by Ube Industries, Ltd., trade name "UBESTA XPA9055X1")
- N-2: polyester-based thermoplastic elastomer (manufactured by TOYOBO Co., Ltd., trade name "PELPRENE P90B")
- A-1: hot-melt adhesive (maleic acid-modified olefin-based resin) (manufactured by Mitsui Chemicals, Inc., trade name "ADMER NB508")
- A-2: hot-melt adhesive (maleic acid-modified olefin-based resin) (manufactured by Mitsui Chemicals, Inc., trade name "ADMER NE827")
- A-3: hot-melt adhesive (maleic acid-modified olefin-based resin) (manufactured by Mitsui Chemicals, Inc., trade name "ADMER SF741")
- A-4: hot-melt adhesive (maleic acid-modified olefin-based resin)

(manufactured by Mitsui Chemicals, Inc., trade name "ADMER SE810")
- A-5: hot-melt adhesive (modified polyester-based elastomer) (manufactured by Mitsubishi Chemical Corporation, trade name "PRIMALLOY-AP GQ331")
- B-1: hot-melt adhesive (maleic acid-modified olefin-based resin) (manufactured by Mitsui Chemicals, Inc., trade name "ADMER QE060")
- B-2: hot-melt adhesive (maleic acid-modified olefin-based resin) (manufactured by Mitsui Chemicals, Inc., trade name "ADMER HE810")
- B-3: hot-melt adhesive (maleic acid-modified olefin-based resin) (manufactured by Mitsubishi Chemical Corporation, trade name "MODIC P555")
- B-4: hot-melt adhesive (ethylene-vinyl alcohol copolymer) (manufactured by Kuraray Co., Ltd., trade name " EVAL F101B")

As seen from the evaluation results shown in Tables above, it was found that, as compared to Comparative Examples, superior riding comfort during traveling was obtained in Examples in which the tensile elastic modulus of the adhesive layer was smaller than the tensile elastic modulus of the resin layer.

## Claims

**1.** A tire (10) comprising:

a circular tire frame (17) comprising a resin material; and
a metal-resin complex (26), wound around an outer circumferential portion of the tire frame (17), which includes a metal member (27), an adhesive layer (25) and a resin layer (28) in this order,
wherein resin encompasses thermoplastic resins, thermoplastic elastomers and thermosetting resins, but not vulcanized rubbers, and
**characterised in that** a tensile elastic modulus of the adhesive layer (25) is less than a tensile elastic modulus of the resin layer (28).

**2.** The tire (10) according to claim 1, wherein, in a case in which the tensile elastic modulus of the adhesive layer (25) is $E_1$ and the tensile elastic modulus of the resin layer (28) is $E_2$, a value of $E_1/E_2$ is from 0.05 to 0.5.

**3.** The tire (10) according to claim 1 or 2, wherein:

the tensile elastic modulus of the adhesive layer (25) is from 1 MPa to 600 MPa, and
the tensile elastic modulus of the resin layer (28) is from 50 MPa to 1,000 MPa.

**4.** The tire (10) according to any one of claims 1 to 3, wherein the adhesive layer (25) contains at least one of an acid-modified olefin-based resin or an acid-modified polyester-based resin.

**5.** The tire (10) according to any one of claims 1 to 4, wherein the resin layer (28) contains a thermoplastic elastomer.

**6.** The tire (10) according to any one of claims 1 to 5, wherein the resin layer (28) contains at least one of a polyamide-based thermoplastic resin, a polyamide-based thermoplastic elastomer, a polyester-based resin, or a polyester-based thermoplastic elastomer.

**7.** The tire (10) according to any one of claims 1 to 6, wherein, in a case in which an average thickness of the adhesive layer (25) is $T_1$ and an average thickness of the resin layer (28) is $T_2$, a value of $T_1/T_2$ is from 0.1 to 0.5.

**8.** The tire (10) according to any one of claims 1 to 7, wherein an average thickness of the adhesive layer (25) is from 5 $\mu$m to 500 $\mu$m.

**9.** The tire (10) according to any one of claims 1 to 8, wherein an average thickness of the resin layer (28) is from 10 $\mu$m to 1,000 $\mu$m.

**10.** The tire (10) according to any one of claims 1 to 9, wherein the resin material contains at least one of a polyamide-based thermoplastic resin, a polyamide-based thermoplastic elastomer, a polyester-based resin, or a polyester-based thermoplastic elastomer.

**11.** The tire (10) according to any one of claims 1 to 10, wherein:

the resin material contains at least one of a polyamide-based thermoplastic resin or a polyamide-based thermoplastic elastomer, and
the resin layer (28) contains at least one of a polyamide-based thermoplastic resin or a polyamide-based thermoplastic elastomer.

**12.** The tire (10) according to any one of claims 1 to 11, wherein the metal member (27) has a thickness of from 0.2 mm to 2 mm.

**13.** The tire (10) according to any one of claims 1 to 12, wherein the metal member (27) is a twisted strand of plural cords.

**14.** The tire (10) according to claim 13, wherein the number of the plural cords is from 2 to 10.

**15.** The tire (10) according to any one of claims 1 to 14, wherein:

the metal-resin complex (26) is arranged in a form of plural cords on the outer circumferential portion of the tire frame (17) along the tire circumferential direction, and
an average distance between metal members (27) of adjacent metal-resin complexes (26) is from 400 μm to 3,200 μm.

**Patentansprüche**

**1.** Reifen (10), umfassend:

ein kreisförmiges Reifengerüst (17), welches ein Harzmaterial umfasst; und
einen Metall-Harzkomplex (26), welcher um einen Außenumfangsabschnitt des Reifengerüsts (17) gewickelt ist, welcher ein Metallglied (27), eine Klebeschicht (25) und eine Harzschicht (28) in dieser Reihenfolge umfasst, wobei das Harz thermoplastische Harze, thermoplastische Elastomere und wärmehärtbare Harze jedoch keine vulkanisierte Gummis umfasst, und
**dadurch gekennzeichnet, dass** ein Zugelastizitätsmodul der Klebeschicht (25) niedriger als ein Zugelastizitätsmodul der Harzschicht (28) ist.

**2.** Reifen (10) nach Anspruch 1, wobei, wenn der Zugelastizitätsmodul der Klebeschicht (25) $E_1$ ist und der Zugelastizitätsmodul der Harzschicht (28) $E_2$ ist, der Wert von $E_1/E_2$ zwischen 0,05 und 0,5 liegt.

**3.** Reifen (10) nach Anspruch 1 oder 2, wobei:
der Zugelastizitätsmodul der Klebeschicht (25) zwischen 1 MPa und 600 MPa liegt und der Zugelastizitätsmodul der Harzschicht (28) zwischen 50 MPa und 1.000 MPa liegt.

**4.** Reifen (10) nach einem der Ansprüche 1 bis 3, wobei die Klebeschicht (25) mindestens eines von einem säuremodifizierten Olefin-basierten Harz oder einem säuremodifizierten Polyester-basierten Harz enthält.

**5.** Reifen (10) nach einem der Ansprüche 1 bis 4, wobei die Harzschicht (28) ein thermoplastisches Elastomer enthält.

**6.** Reifen (10) nach einem der Ansprüche 1 bis 5, wobei die Harzschicht (28) mindestens eines von einem Polyamid-basierten thermoplastischen Harz, einem Polyamid-basierten thermoplastischen Elastomer, einem Polyester-basierten Harz oder einem Polyester-basierten thermoplastischen Elastomer enthält.

**7.** Reifen (10) nach einem der Ansprüche 1 bis 6, wobei, wenn eine durchschnittliche Dicke der Klebeschicht (25) $T_1$ ist und eine durchschnittliche Dicke der Harzschicht (28) $T_2$ ist, der Wert von $T_1/T_2$ zwischen 0,1 und 0,5 liegt.

**8.** Reifen (10) nach einem der Ansprüche 1 bis 7, wobei eine durchschnittliche Dicke der Klebeschicht (25) zwischen 5 μm und 500 μm liegt.

**9.** Reifen (10) nach einem der Ansprüche 1 bis 8, wobei eine durchschnittliche Dicke der Harzschicht (28) zwischen 10 μm und 1.000 μm liegt.

**10.** Reifen (10) nach einem der Ansprüche 1 bis 9, wobei das Harzmaterial mindestens eines von einem Polyamid-basierten thermoplastischen Harz, einem Polyamid-basierten thermoplastischen Elastomer, einem Polyester-basierten Harz oder einem Polyester-basierten thermoplastischen Elastomer enthält.

**11.** Reifen (10) nach einem der Ansprüche 1 bis 10, wobei:

das Harzmaterial mindestens eines von einem Polyamid-basierten thermoplastischen Harz oder einem Polyamid-basierten thermoplastischen Elastomer enthält, und
die Harzschicht (28) mindestens eines von einem Polyamid-basierten thermoplastischen Harz oder einem Polyamid-basierten thermoplastischen Elastomer enthält.

**12.** Reifen (10) nach einem der Ansprüche 1 bis 11, wobei das Metallglied (27) eine Dicke zwischen 0,2 mm und 2 mm aufweist.

**13.** Reifen (10) nach einem der Ansprüche 1 bis 12, wobei das Metallglied (27) aus einem verdrillten Strang aus mehreren Kords besteht.

**14.** Reifen (10) nach Anspruch 13, wobei die Anzahl von mehreren Kords zwischen 2 und 10 beträgt.

**15.** Reifen (10) nach einem der Ansprüche 1 bis 14, wobei:

der Metall-Harzkomplex (26) in der Form von mehreren Kords auf dem Außenumfangsabschnitt des Reifengerüsts (17) entlang der Reifenumfangsrichtung angeordnet ist, und
ein durchschnittlicher Abstand zwischen Metallgliedern (27) von angrenzenden Metall-Harzkomplexen (26) zwischen 400 μm und 3.200 μm liegt.

**Revendications**

**1.** Bandage pneumatique (10), comprenant :

un cadre de bandage pneumatique circulaire (17) comprenant un matériau de résine ; et
un complexe de métal-résine (26), enroulé autour d'une partie circonférentielle externe du cadre du bandage pneumatique (17), incluant un élément métallique (27), une couche adhésive (25) et une couche de résine (28), dans l'ordre indiqué ;
dans lequel la résine comprend des résines thermoplastiques, des élastomères thermoplastiques et des résines thermodurcissables, mais non pas de caoutchoucs vulcanisés ; et
**caractérisé en ce qu'**un module d'élasticité en traction de la couche adhésive (25) est inférieur à un module d'élasticité en traction de la couche de résine (28).

**2.** Bandage pneumatique (10) selon la revendication 1, dans lequel, lorsque le module d'élasticité en traction de la couche adhésive (25) est $E_1$ et le module d'élasticité en traction de la couche de résine (28) est $E_2$, une valeur de $E_1/E_2$ se situe entre 0,05 et 0,5.

**3.** Bandage pneumatique (10) selon les revendications 1 ou 2, dans lequel :

le module d'élasticité en traction de la couche adhésive (25) se situe entre 1 MPa et 600 MPa ; et
le module d'élasticité en traction de la couche de résine (28) se situe entre 50 MPa et 1.000 MPa.

**4.** Bandage pneumatique (10) selon l'une quelconque des revendications 1 à 3, dans lequel la couche adhésive (25) contient au moins une résine, une résine à base d'oléfine modifiée par un acide ou une résine à base de polyester modifiée par un acide.

**5.** Bandage pneumatique (10) selon l'une quelconque es revendications 1 à 4, dans lequel la couche de résine (28) contient un élastomère thermoplastique.

**6.** Bandage pneumatique (10) selon l'une quelconque des revendications 1 à 5, dans lequel la couche de résine (28) contient au moins une résine thermoplastique à base de polyamide, un élastomère thermoplastique à base de

polyamide, une résine à base de polyester ou un élastomère thermoplastique à base de polyester.

**7.** Bandage pneumatique (10) selon l'une quelconque des revendications 1 à 6, dans lequel, lorsqu'une épaisseur moyenne de la couche adhésive (25) est $T_1$ et une épaisseur moyenne de la couche de résine (28) est $T_2$, une valeur de $T_1/T_2$ se situe entre 0,1 et 0,5.

**8.** Bandage pneumatique (10) selon l'une quelconque des revendications 1 à 7, dans lequel une épaisseur moyenne de la couche adhésive (25) se situe entre 5 μm et 500 μm.

**9.** Bandage pneumatique (10) selon l'une quelconque des revendications 1 à 8, dans lequel une épaisseur moyenne de la couche de résine (28) se situe entre 10 μm et 1.000 μm.

**10.** Bandage pneumatique (10) selon l'une quelconque des revendications 1 à 9, dans lequel le matériau de résine contient au moins une résine thermoplastique à base de polyamide, un élastomère thermoplastique à base de polyamide, une résine à base de polyester ou un élastomère thermoplastique à base de polyester.

**11.** Bandage pneumatique (10) selon l'une quelconque des revendications 1 à 10, dans lequel :

le matériau de résine contient au moins une substance, une résine thermoplastique à base de polyamide ou un élastomère thermoplastique à base de polyamide ; et
la couche de résine (28) contient au moins une substance, une résine thermoplastique à base de polyamide ou un élastomère thermoplastique à base de polyamide.

**12.** Bandage pneumatique (10) selon l'une quelconque des revendications 1 à 11, dans lequel l'élément métallique (27) a une épaisseur se situant entre 0,2 mm et 2 mm.

**13.** Bandage pneumatique (10) selon l'une quelconque des revendications 1 à 12, dans lequel l'élément métallique (27) est constitué par un brin torsadé de plusieurs câblés.

**14.** Bandage pneumatique (10) selon la revendication 13, dans lequel le nombre des plusieurs câblés se situe entre 2 et 10.

**15.** Bandage pneumatique (10) selon l'une quelconque des revendications 1 à 14, dans lequel :

le complexe de métal-résine (26) est agencé en une forme de plusieurs câblés sur la partie circonférentielle externe du cadre du bandage pneumatique (17), le long de la direction circonférentielle du bandage pneumatique ; et
une distance moyenne entre des éléments métalliques (27) de complexes de métal-résine adjacents (26) se situe entre 400 μm et 3.200 μm.

FIG. 1A

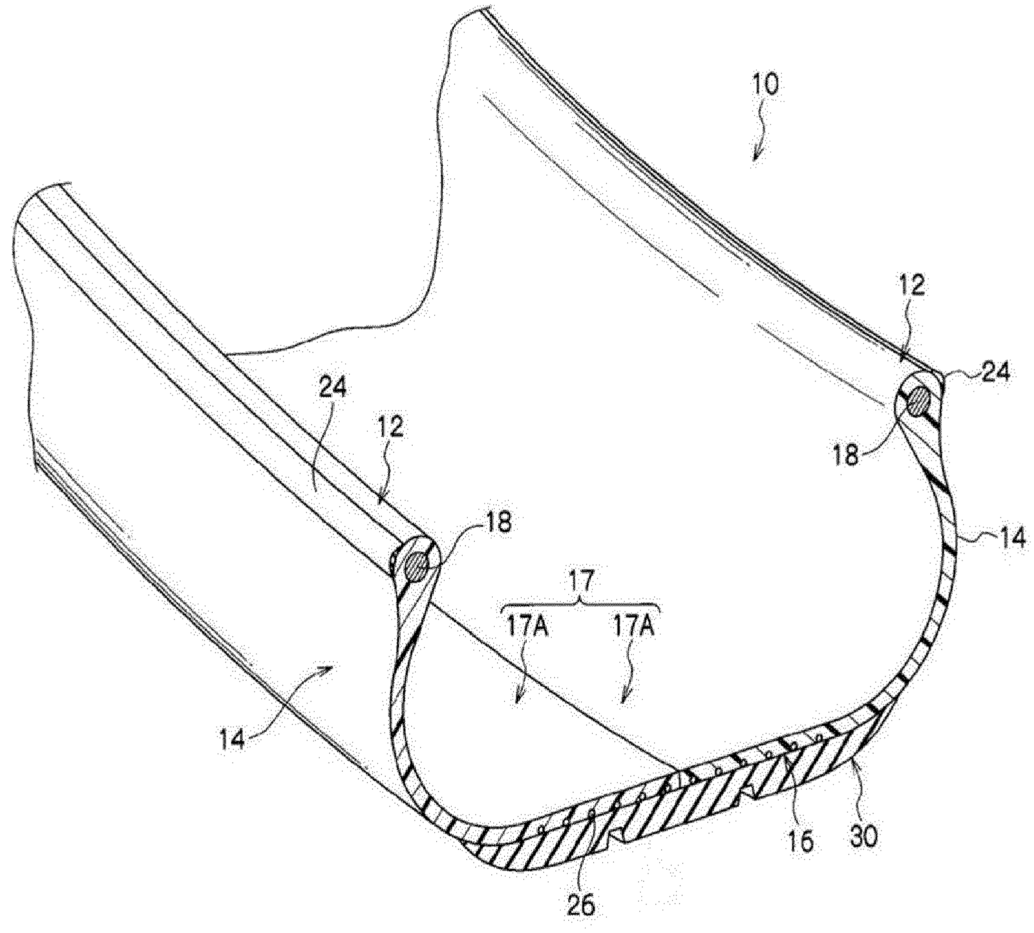


FIG. 1B

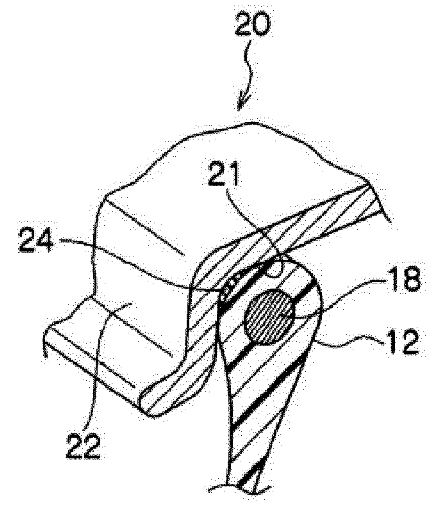

FIG. 2

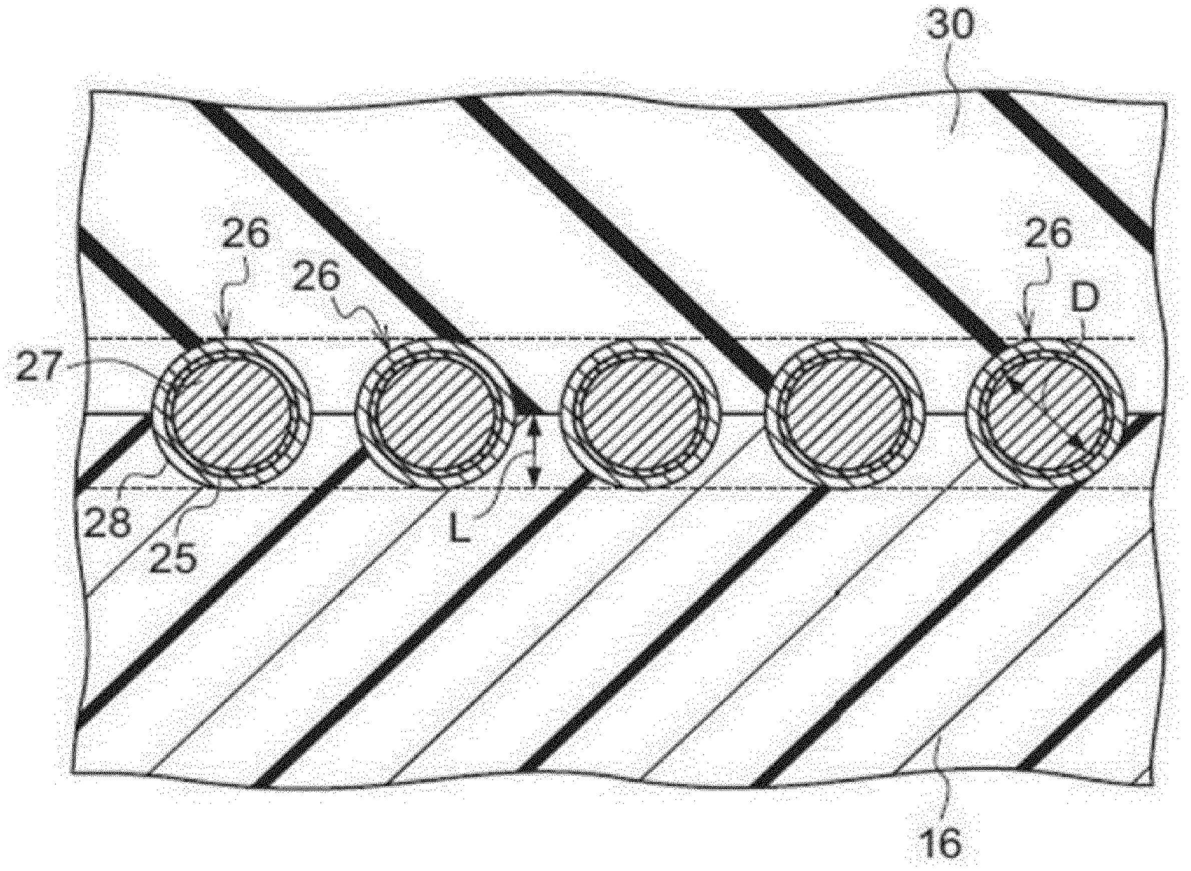

FIG. 3

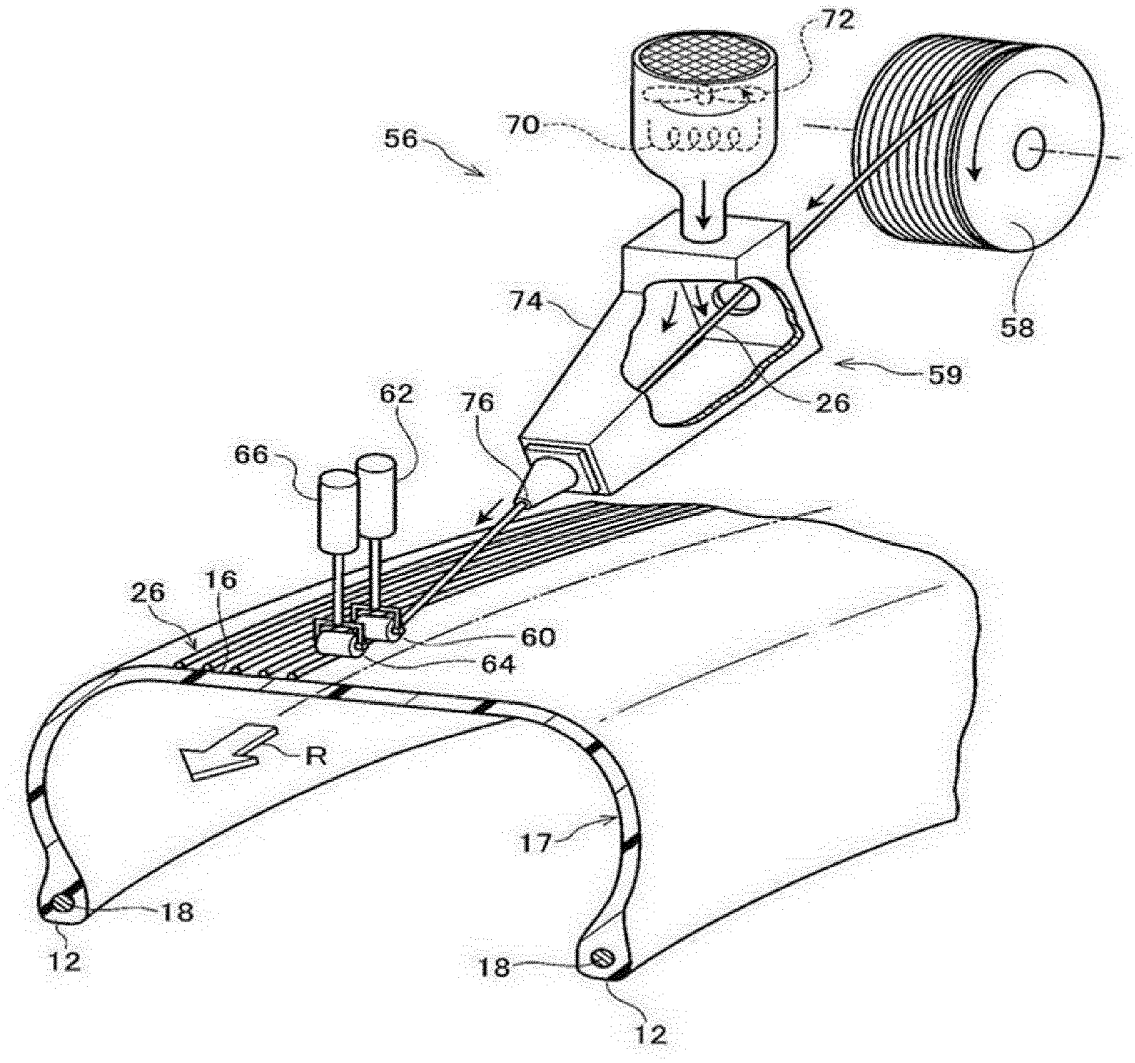

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014175453 A
- JP 2004346273 A
- JP H05331256 A